# EUROPEAN PATENT APPLICATION

(11) **EP 0 805 596 A1**
(43) Date of publication of application: **05.11.1997**
(21) Application number: 97201781.8
(22) Date of filing: 29.11.1991
(51) Int. Cl.: H04N 7/26

(54) **Motion vector detection and band compression apparatus**

(30) Priority: 30.11.1990 JP 338492/90
(62) Divisional of application: 91311131.6
(71) Applicant: SONY CORPORATION, Tokyo 141 (JP)
(72) Inventor: Iwase, Seiichiro, c/o Sony Corp. Int.Prop.Dpt., Shinagawa-ku, Tokyo 141 (JP)
(74) Representative: Pratt, Richard Wilson

(57) **Abstract**

A motion vector detection apparatus comprises a delay circuit for receiving first picture data and for outputting a particular detection range of picture data, a block comparison circuit for receiving both second picture data with a particular time difference from the first picture data and picture data from the delay circuit and for detecting a difference between picture data from the delay circuit and second picture data for each block of P x Q picture elements, and a determination circuit for determining a degree of matching of a picture of an output signal from the block comparison circuit. The delay circuit comprises a scanning conversion circuit for converting input picture data from conventional horizontal scanning into scanning within the block, and a number of shift registers for receiving the first picture data with a delay of one frame. The shift registers are arranged such that both a first block of P x Q picture elements which are earlier than a particular reference tap of the shift registers and a second block which deviates by i picture elements horizontally and by j picture elements vertically from the first block are set, and such that when the first block does not deviate from the second block, a tap with a delay which is equal to the difference between each picture element of the second block and the reference tap is selected, the second picture data being obtained from the selected tap.

## Description

This invention relates to motion vector detection apparatus and to band compression apparatus providing a combination of motion compensation and inter-frame encoding.

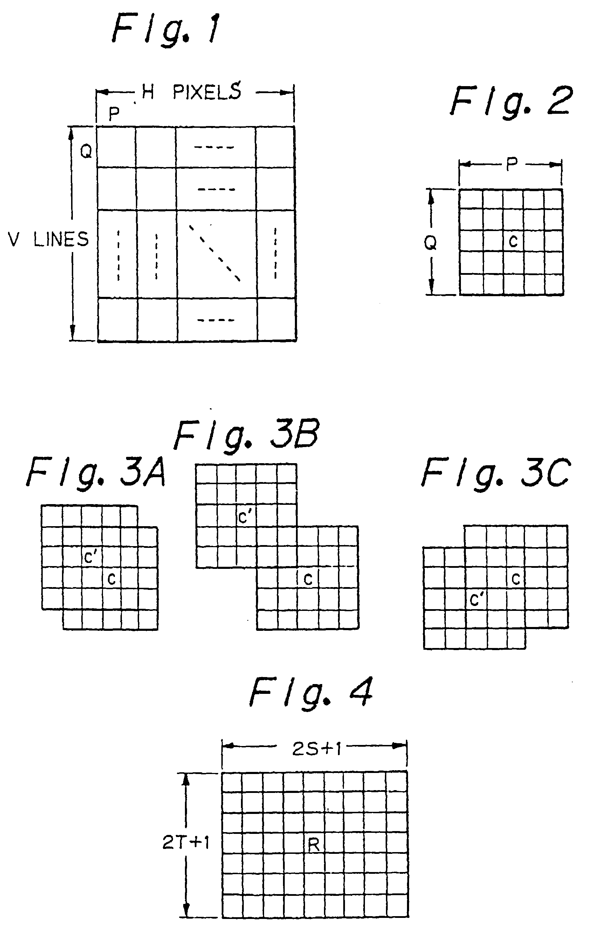

It is known in the art of image (picture) signal processing to detect motion vectors. A method of detecting motion vectors will now be described. Assume that one picture (a frame which is not interlaced) is composed of H picture elements in the horizontal direction and V lines in the vertical direction, as shown in Figure 1 of the accompanying drawings. In addition, assume that a screen representing the picture is segmented into blocks of P picture elements by Q lines. Figure 2 of the accompanying drawings shows an example of such a block, in which P = 5 and Q = 5, and in which the centre picture element of the block is designated C.

Figures 3A to 3C of the accompanying drawings show positional relationships between such a block where a picture element C is the centre picture element and another block where a picture element C' is the centre picture element. The former block is from a current frame, whereas the latter block is from a preceding frame and matches the picture content of the block of the current frame but, due to motion, is at a position in the preceding frame with a centre picture element C'. Figure 3A thus represents a motion vector where the centre position of the picture has moved by +1 picture element in the horizontal direction and by +1 line in the vertical direction. Figure 3B represents a motion vector where the centre position of the picture has moved by +3 picture elements in the horizontal direction and by +3 lines in the vertical direction. Figure 3C represents a motion vector where the centre position of the picture has moved by +2 picture elements in the horizontal direction and by -1 line in the vertical direction. Generally, a motion vector can be obtained for each block of the current frame.

When the range of detecting a motion vector is ± S picture elements in the horizontal direction and ± T lines in the vertical direction, a particular block of the current frame should be compared with various blocks in the preceding frame where C' is moved from C, which is the centre of the current frame, over ± S picture elements in the horizontal direction and over ± T lines in the vertical direction. Figure 4 of the accompanying drawings indicates that, when the position of the centre picture element C of a particular block of the current frame is R, it should be compared with $\text{(2S + 1) x (2T + 1)}$ blocks of the preceding frame. In other words, all blocks of the preceding frame where C' is present, as shown in Figure 4, should be compared. Figure 4 shows an example where S = 4 and T = 3.

An example of the case where P = 5, Q = 5, S = 4, and T = 3 will now be described.

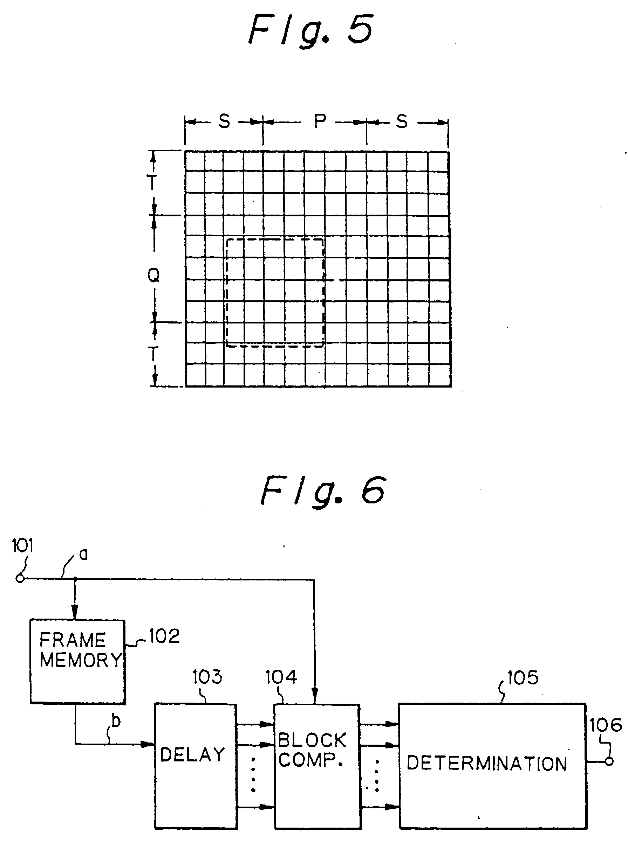

When a particular block to be considered in the current frame is at the position of the 5 picture elements by the 5 lines at the centre portion of Figure 5 of the accompanying drawings, all blocks made up of 5 picture elements by 5 lines in the box represented by solid lines and made up of the (P + 2S) by (Q + 2T) picture elements shown in Figure 5, including ± S picture elements in the horizontal direction and ± T lines in the vertical direction, with the centre at the same position as the preceding frame, should be compared.

To simplify operation, some of the blocks may be omitted (that is, part of the blocks may be omitted) in detecting a motion vector. In other words, while in the above example all positional relationships are compared over ± S picture elements in the horizontal direction and ± T lines in the vertical direction, some combinations of these comparisons may in fact be omitted. Nevertheless, in the following, all combinations are compared so as to simplify the description.

Figure 6 is a conceptual block diagram of a system or structure for detecting a motion vector. Data a, which is supplied from an input terminal 101, is picture data of a current frame. Data b is picture data of a just preceding frame which is delayed for one frame by a frame memory 102. A delay portion 103 causes the data b of the preceding frame to become data with various positional relationships as shown in Figure 3. The data is compared with the data a for the various positional relationships. A block comparison portion 104 outputs a matching ratio or degree of the picture for each deviated position. A determination portion 105 compares the matching ratios and outputs a most suitable deviation amount, namely a motion vector, to an output terminal 106.

The hardware for detecting the motion vector shown in Figure 6 requires large capacity memories for the delay portion 103 and the block comparison portion 104, together with the frame memory 102. When some of the comparisons are not omitted, the size of a calculation portion of the block comparison portion 104 becomes large. In addition, the size of the determination portion 105 also becomes large, depending on the method of omitting comparisons. Thus, the hardware for detecting the motion vector takes up a large part of a system which employs the detection of motion vectors.

Although software for detecting motion vectors has been proposed (see Japanese Patent Application Publication No. JP-A-61 105176), due to restricted processing speed of the software it is necessary to use very simplified comparisons and determination methods. Thus, disadvantageously, the accuracy of detection of motion vectors becomes low.

Embodiments of the invention described below seek to decrease the amount of hardware for the delay portion 103 and the block comparison portion 104, except for the determination portion 105 shown in Figure 6, and in particular seek to decrease the amount of hardware for the delay portion 103.

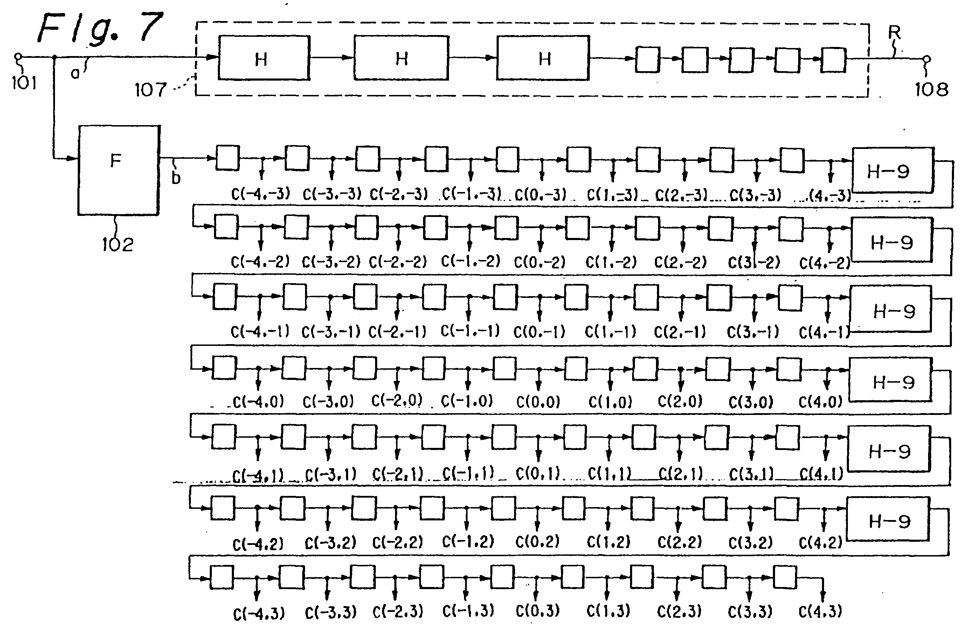

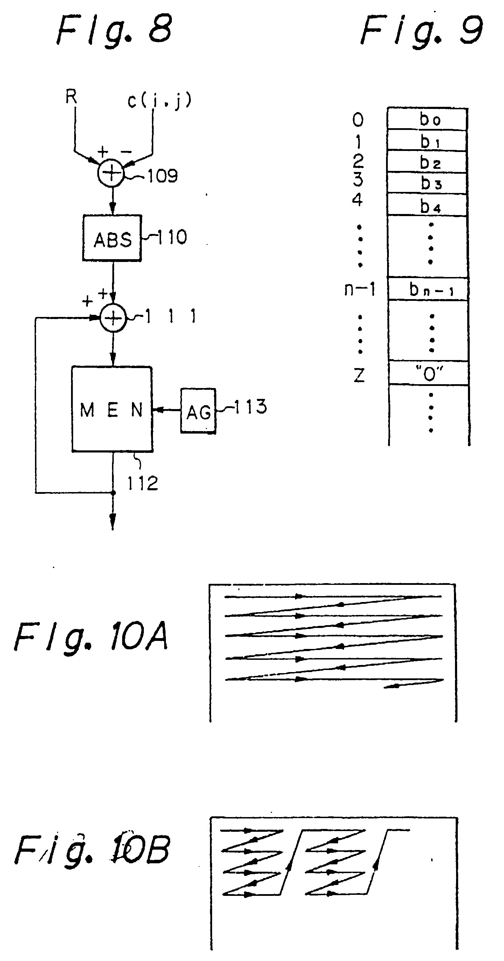

Figures 7 and 8 show a first previously proposed system. Figure 7 shows portions equivalent to the frame memory 102 and the delay portion 103 shown in Figure 6. More specifically, in Figure 7, a block F is the frame memory 102 for delaying input data by one frame; blocks H are delay circuits for effecting a delay of one horizontal scanning line; small blocks without reference signs are delay circuits for effecting a delay of one picture element, namely registers; and blocks (H - 9) are delay circuits for delaying picture elements by one line less 9 picture elements. Thus, one line is delayed by one block (H - 9) and nine of the small blocks (registers).

The input data a of the current frame is delayed for 3 lines and 5 picture elements by a delay circuit 107 (shown with its constituent elements surrounded by a dotted line) which becomes the centre position R of the block. The resultant data is supplied to an output terminal 108.

Since the data b has a delay of one frame relative to the data a, the positions of the picture elements of the data a are the same as those of the data b. In addition, as shown in Figure 7, groups of nine stages of registers and one delay circuit (H - 9) are connected in series, and a tap C (0, 0) which has a delay of 3 lines and 5 picture elements relative to the data b has a delay of one frame relative to the centre position R.

At the input terminal 101 shown in Figure 7, a data sequence which has been horizontally scanned is inputted like a conventional picture signal. When the data sequence is stopped at a particular timing, picture elements in the vicinity of the preceding frame relative to the picture element R of the current frame are obtained at the taps {C (i, j)} (where $\text{i = -Sn + S}$, $\text{j = -Tn + T}$), as shown in Figure 4. For example, at the tap C (1, 0), data which is older by one picture element in the horizontal direction than C (0, 0) and (R) is obtained. In other words, the data of the picture element to the left of R on the display screen shown in Figure 4 is obtained.

A motion vector is obtained, by using each tap shown in Figure 7, by performing the following process. At each of the taps {C (i, j)} (where $\text{i = -Sn + S}$, $\text{j = -Tn + T}$), data at each deviated position as shown in Figure 4 is obtained. The block comparison portion 104 compares each tap with R, calculates the degree of matching (of two pictures), and obtains a result for each value of (i, j). Thereafter, the determination portion 105 examines the results and selects a proper motion vector (i, j). (In a particular situation, i and j may be determined with real numbers rather than integer numbers.)

Then, the matching ratio for each value of (i, j) is obtained in a circuit as shown in Figure 8. The circuit shown in Figure 8 is required for each tap C (i, j). In other words, since no part of the block comparisons is omitted, $\text{(2S + 1) x (2T + 1)}$ circuits as shown in Figure 8 are required.

In Figure 8, blocks are compared for each tap C (i, j), as shown in Figure 3. From R, each picture element of the block at the centre portion shown in Figure 5 is obtained. On the other hand, from the tap C (i, j), each picture element of the block of the preceding frame which deviates by i picture elements in the horizontal direction and by j lines in the vertical direction is obtained. A subtraction circuit 109 obtains the difference between each corresponding position of the two blocks. As absolute value calculation circuit 110 calculates the absolute value (ABS) of the difference. An addition circuit 111 and a memory 112 accumulate the difference for all picture elements making up one block, namely for P x Q elements. The accumulated output is the degree of matching for (i, j).

In the above-described prior proposal, an example where the absolute value (ABS) of the difference was calculated was considered. However, it is also possible to use the square of the difference.

The description of the above prior proposal has not yet been completed. That is, although the input shown in Figure 7 has been horizontally scanned, the same data (except that it is shifted in terms of time) is outputted to R and each tap C (i, j). Thus, data cannot be compared block by block as shown in Figure 3. However, this problem can be solved by disposing the memory 112 in the accumulator shown in Figure 8.

At both the R and C (i, j) inputs shown in Figure 8, each picture element according to blocks in the combinations shown in Figure 3 should be obtained in succession. However, since the input shown in Figure 3 has been horizontally scanned, each picture element of the first line of the block is inputted to R and C (i, j). Thereafter, data for comparing the adjacent block, rather than each picture element of the next line, is inputted to R and C (i, j). After H/P blocks which are horizontally disposed as shown in Figure 1, each picture element of the second line of the former block is compared. Thus, when the cumulative operation for obtaining the degree of matching is performed, it is possible to skip the operation for each line on the midway and perform the cumulative operation for comparing the adjacent block. To do that, the memory 112 for storing H/P words or more is arranged to be an accumulation memory.

Figure 9 is a schematic diagram representing the operation of the memory 112. In Figure 9, it is assumed that $\text{n = H/P}$. Also, in Figure 9, bk (where k = 0 to n - 1) represents the content of each address at which data on the midway is stored.

The circuit of Figure 8 includes an address generation circuit 113 that increments the address by 1 at intervals of P cycles which are equivalent to the number of horizontal picture elements making up one block, and resets the address to "0" after one horizontal scanning is completed. Thus, the address generation circuit 113 can control a memory address assignment circuit in the manner shown in Figure 9.

In addition, the cumulative operation for matching blocks should be reset at intervals of H/P blocks disposed in the horizontal direction of the screen. This reset operation can be performed by setting all values b0 to bn-1 of the memory 112 to "0". Alternatively, it is possible to construct the address generation circuit 113 so that an address Z which stores "0" is selected in the memory when the first picture element is accumulated in comparing each block.

In Figure 7, to obtain data at the position R, a delay of (3H + 5) is provided in the delay circuit 107. However, it is possible to omit such a delay by arranging for the frame store 102 to have a delay circuit of ($\text{F = -3H - 5}$).

As shown in Figure 9, the accumulation memory 112 has words in the amount of $\text{n = H/P}$ so as to obtain a motion vector for each block shown in Figure 1. Thus, when one motion vector is obtained, for each frame, the number of words that the memory 112 contains becomes one word. In other words, the number of words that the memory 112 should have depends upon the condition of obtaining motion vectors.

Although the circuits shown in Figures 7 and 8 can be realised and controlled with relative ease, their sizes are disadvantageously large.

With respect to hardware, the frame memory 102 and the calculation circuits shown in Figure 8 (the items 109, 110, and 111) for comparing blocks are theoretically essential. However, the large number of delay circuits (H - 9) and the memories 112 having H/P words for each cumulative operation are required constructionally, not essentially. Thus, it is preferable to omit such circuits by using another construction method.

The delay circuits and the memories are required since input data has been horizontally scanned. In other words, the memories are required to compare the blocks as shown in Figure 3 in accordance with the input which has been horizontally scanned as shown in Figure 10A.

To prevent that, a scanning method in accordance with each block, where a data sequence which has been horizontally scanned for each block is used for the input, can be used.

Thus, a second prior proposal compares blocks in such a manner that an input data sequence a is data which has been scanned for each block as shown in Figure 10B, while a data sequence b with a delay of one frame relative thereto is scanned in a wide area when the block of the data a is at the centre portion shown in Figure 5.

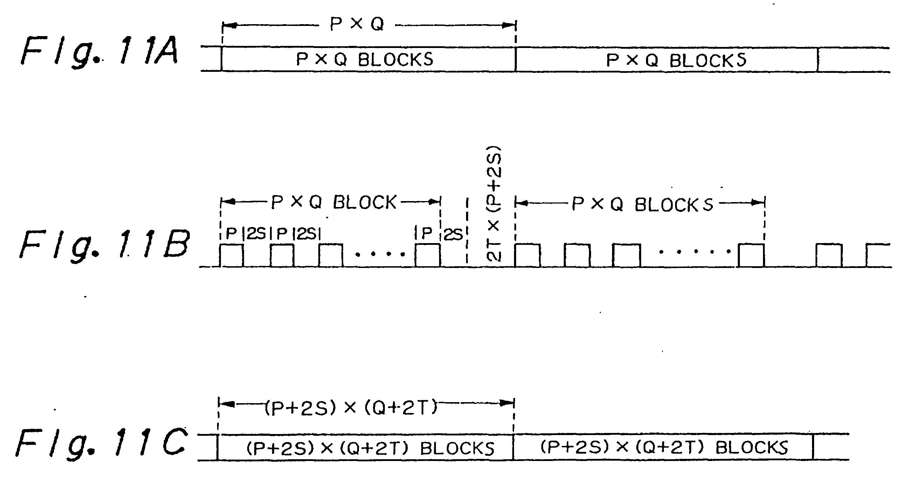

In this case, the amount of data of the former data sequence differs from that of the latter data sequence. Specifically, while the number of picture elements of one block to be compared for the data sequence a is (P x Q), that for the data sequence b is {$\text{(2S + P) x (2T + Q)}$}. Thus, the following operation is required. The clock frequency of the data sequence b is correspondingly increased so that the data sequence a and the data sequence b take place in accordance with timing charts shown in Figures 11A to 11C of the accompanying drawings. Specifically, when the input data is scanned as shown in Figure 10B, the data sequence a takes place in accordance with a timing chart as shown in Figure 11A. However, in this case, by increasing the rate of the data sequence a, a timing as shown in Figure 11B is used. The ratio of block frequencies between them is represented as $\text{(2S + P) x (2T + Q)/P x Q}$. Accordingly, there are time slots in which no data is present. On the other hand, the data sequence b takes place as shown in Figure 11C.

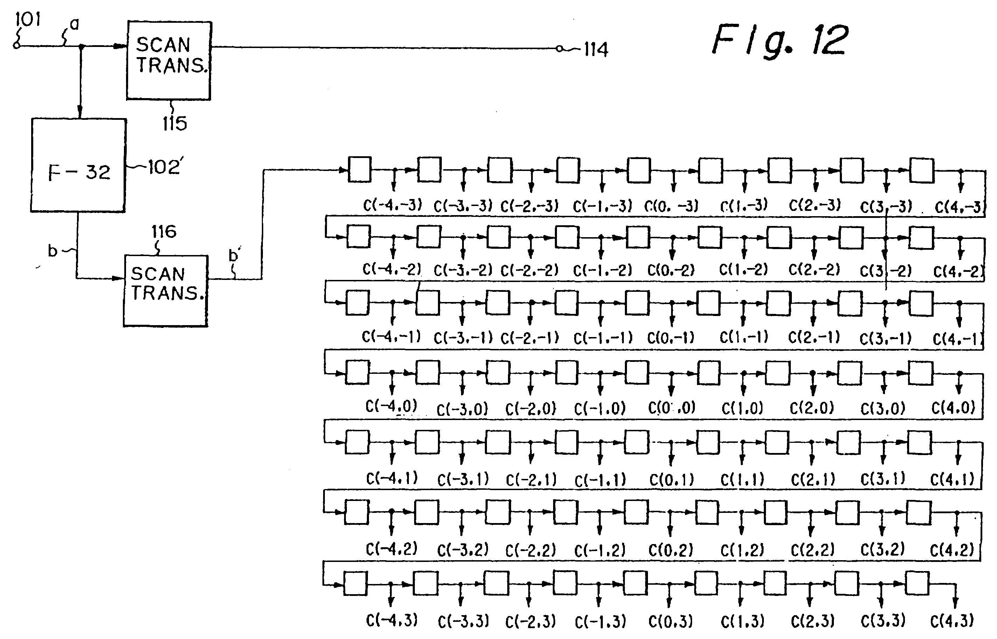

Figure 12 depicts an arrangement including a scanning transformation circuit 115 for transforming the input data sequence a into a data sequence as shown in Figure 11B. A scanning sequence transformation circuit 116 transforms a data sequence b from a frame memory 102' into a data sequence as shown in Figure 11C. The data sequence b' in which the scanning sequence has been transformed is sent to a delay portion which is composed of $\text{(2S + 1) x (2T + 1)}$ shift register stages, which are the same as those shown in Figure 7. Thereafter, in the construction shown in Figure 8, blocks are compared. In the second prior proposal, the (H - 9) delay circuits used in the first prior proposal (Figure 7) become unnecessary. Thus, the number of words that the memory of the accumulator shown in Figure 8 requires becomes one word.

However, as shown in Figure 11C, since the data sequence b' has (P + 2S) picture elements in the horizontal direction, it has 2S extra picture elements in comparison with the data sequence b. Likewise, the former has 2T extra lines in the vertical direction in comparison with the latter. Thus, it is necessary to stop the cumulative operation for extra picture elements.

The frame store 102' in Figure 12 has a delay (F-32) which is smaller than a frame delay by 32 picture elements. Thus, the frame memory 102' sets the timing difference between R and C (0, 0) to one frame.

When the scanning sequence of the television signal is transformed into the scanning sequence for every (P x Q) blocks, the scanning sequence shown in Figure 10A is transformed into the scanning sequence of every block shown in Figure 10B. To do that, at least a line memory with the vertical length of the blocks is required. This memory is not small in terms of hardware. However, since the scanning operation as shown in Figure 10B is required for various purposes such as for band compression which requires the detection of a motion vector, the scanning sequence transformation of P x Q as shown in Figure 11A does not always become a burden upon the apparatus. On the other hand, since the data sequence a' as shown in Figure 11B and the scanning sequence transformation of $\text{(P + 2S) x (Q + 2T)}$ as shown in Figure 11C are not used for other process, they become a burden upon the apparatus.

More accurately, in the scanning sequence transformation of $\text{(P + 2S) x (Q + 2T)}$, the input data is scanned as shown in Figure 10B with overlaps of 2S picture elements in the horizontal direction and of 2T lines in the vertical direction.

The construction of the $\text{(P + 2S) x (Q + 2T)}$ shift register stages in the second prior proposal is simpler than that of the (H - 9) delay circuit group in terms of hardware. Thus, the delay portion of the second prior proposal is simpler than that of the first prior proposal. In addition, in the second prior proposal, a simple register can be used for the memory of the accumulator. Thus, a significant effect can be obtained. On the other hand, in the second prior proposal, the scanning sequence transformations P x Q and $\text{(P + 2S) x (Q + 2T)}$ are required. Thus, in the second prior proposal, more memories than the (H - 9) delay circuit group shown in Figure 7 are required. In addition, after the scanning sequence transformation is performed, the data rate is increased by $\text{(P + 2S) x (Q + 2T)/P x Q}$ times. Moreover, the cumulative operation should be controlled.

Furthermore, motion vectors which are detected are compensated in various picture processes.

In other words, in the case of a process which cannot be performed only with one frame or one field, when the motion of a moving picture on the screen is not considered, a process between frames or fields cannot be performed. In practice, the compensation of a motion vector is required for band compression of pictures, luminance/chrominance (Y/C) separation, and non- interlace operation.

In the compensation of a motion vector, two frames (or fields) are compared so as to obtain a motion vector, namely a deviation between the pictures. Thereafter, one of the frames (or fields) is moved according to the amount of the deviation so as to overlap both the pictures.

Normally, a motion picture involves not only parallel movement, but also rotation, enlargement, and reduction. However, in the present state of picture processing technology, only the parallel movement component is detected and considered in the form of a motion vector. According to a motion vector detection method which has been widely used, a screen is divided into small square blocks and a motion vector is then obtained for each block. With respect to problems in detecting motion vectors and compensating them, the following items should be considered.
(A) As a result of the block matching operation, when the function of the matching ratio has many minimum values, how they should be determined.
(B) Since only one vector can be obtained for each block, although the case where there are two or more motions is out of the question, even in a simple motion a block at a contour portion of the block and a block including an isolated small motion subject cannot be considered.

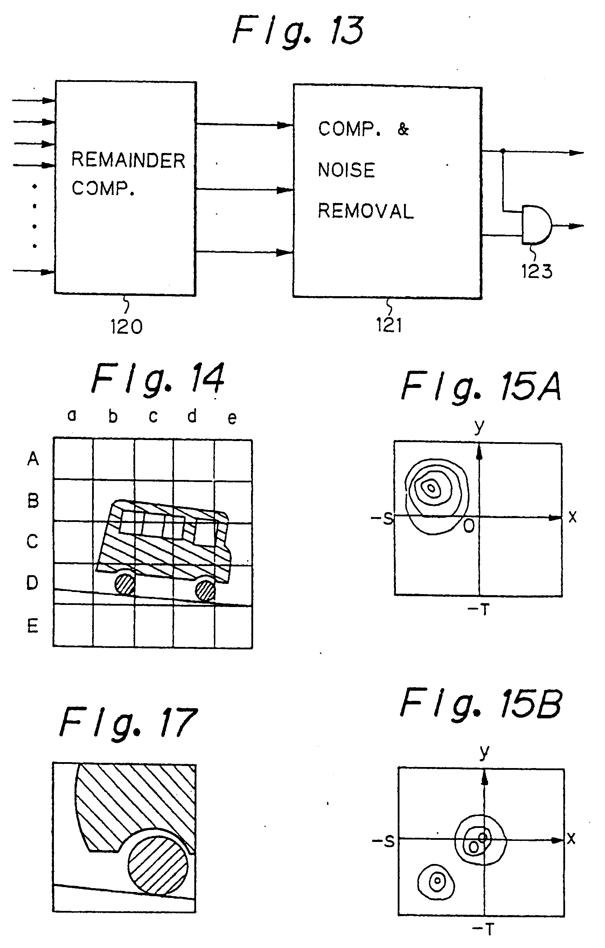

For example, when an automobile runs to the right on a screen as shown in Figure 14 of the accompanying drawings:
(1) When the block matching operations are performed for the blocks C-c and C-d, the motion of the automobile can be obtained.
(2) The blocks B-b, B-c, B-d, B-e, C-b, C-e, D-b, D-c, D-d and D-e include contours of the motion subject (automobile). Since only one block has two motion vectors, the determination of motion vectors is troublesome.
(3) The blocks other than those mentioned in (1) and (2) are still.
In these blocks, motion vectors can be obtained.

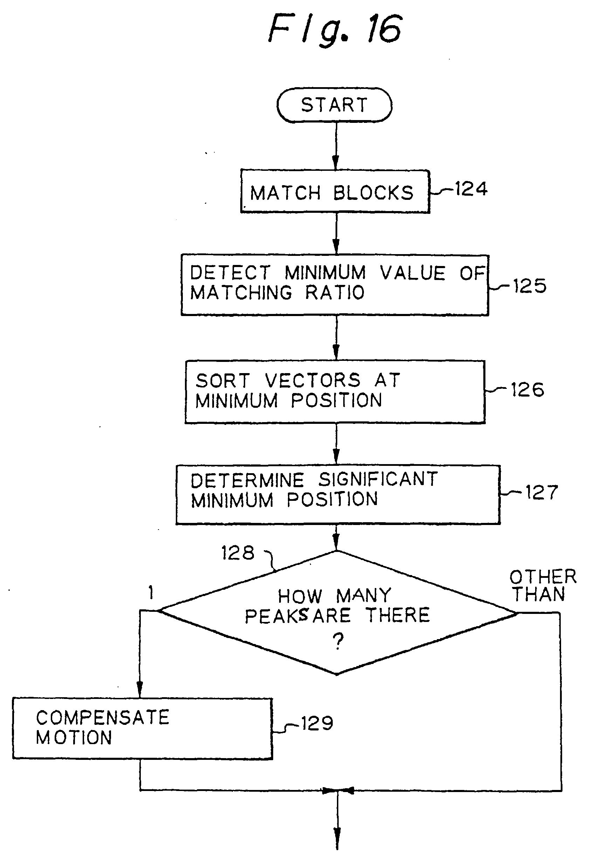

It has been proposed that, in the determination portion 105 of the construction shown in Figure 6, a motion vector be detected according to a procedure as shown in Figure 16 of the accompanying drawings. With this motion vector, the motion is compensated. As shown in Figure 13 of the accompanying drawings, the determination portion 105 comprises a remainder comparison circuit 120, to which a remainder for each deviated position after comparison of blocks is sent, and a comparison and noise removal circuit 121. The remainder comparison circuit 120 supplies the position and the amount of the most minimum value of the remainder, the position and amount of the second minimum value of the remainder, and the position and amount of the third minimum value of the remainder, to the comparison and noise removal circuit 121, which removes data which is determined to be noise and compares remainders. As a result, a determination signal representing the validity of the motion compensation and a motion vector are outputted through an AND gate 123.

In the determination portion 105, as shown in Figure 16, blocks are matched (in a step 124). Thereafter, the minimum value of the degree of matching is detected (in a step 125). The vectors at the minimum position are sorted in the order of matching ratios (in a step 126). The significant minimum position (where it is determined that a motion subject of the vector is present) is determined (in a step 127). The number of peaks of the minimum position is checked (in a step 128). If the number of peaks is 1, the motion is compensated (in a step 129). Otherwise, the motion is not compensated.

In carrying out the above-described determination procedure, many known algorithms could be used for detecting the minimum value, for sorting vectors at the minimum position in the order of matching ratios, and for determining the significant position. However, they require complicated operations in general. In other words, they require many determinations which decide the subsequent operations, rather than standardised and simply repeated operations.

When the range for detecting a motion vector in matching blocks is ± S picture elements in the horizontal direction (x axis) and ± T picture elements in the vertical direction, the frame difference (field difference) of the picture blocks is accumulated for the amount of each motion vector (x, y) (where $\text{x = ± S}$ and $\text{y = ± T}$). In this way, three-dimensional data shown by contour line indications in Figures 15A and 15B of the accompanying drawings are obtained. The minimum value of the three-dimensional data is the minimum value of the matching ratio.

For example, in Figure 15A, the minimum value is present at a vector which is such as a background in the panning of a camera or within the contours of a moving subject. On the other hand, Figure 15B shows the case of a contour of a moving subject where two minimum values (two vectors) are present.

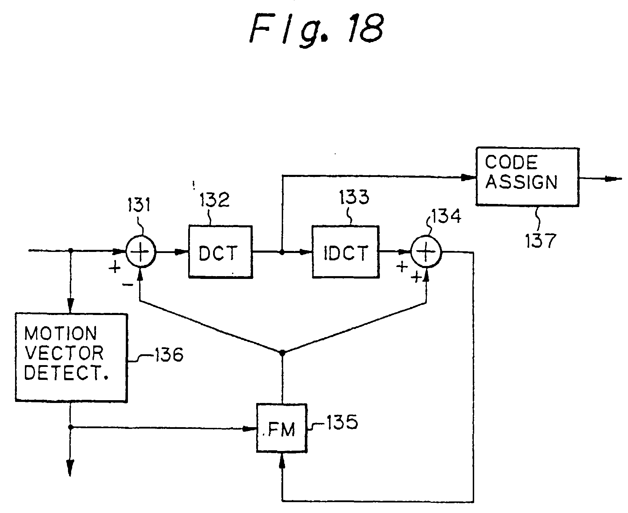

The contour of the moving subject is for example the block D-b of Figure 14, which block is shown enlarged in Figure 17 of the accompanying drawings.

The determination portion and motion vector compensation technique as described above are subject to the following disadvantages.
(i) The motion vector detection procedure, namely the procedure for determining the significant minimum position by using the distribution of the matching ratio obtained by the block matching operation, is complicated.
(ii) Since only one vector can be obtained from each block, the contour of a motion subject cannot be compensated. Thus, the contour of the motion picture being obtained tends to become blurred.

In addition, an inter-frame encoding technique using motion compensation has been proposed. The inter-frame encoding is used for band compression employed for transmitting a picture signal. The encoding method, which is a combination of motion compensation and inter-frame differentiation, can be roughly accomplished in a construction as shown in Figure 18 of the accompanying drawings. For the theory of operation of the circuitry, refer for example to "Multidimensional Signal Processing of TV Pictures", Nuki Fuki, Nikkan-Kogyo Shinbun, pp 266-280, particularly Figure 7-29 on page 274.

The arrangement shown in Figure 18 includes a discrete cosine transformation (DCT) circuit 132, an inverse discrete cosine transformation (IDCT) circuit 133, and a frame memory (FM) 135 for delaying a frame. Input data is supplied to a motion vector detection circuit 136 and a subtraction circuit 131. The subtraction circuit 131 subtracts a locally decoded output of the preceding frame from the input data. The local decoding is performed by the IDCT circuit 133 and an addition circuit 134. The amount of encoded data which is generated in the DCT circuit 132 is compressed by encoding, such as Huffman encoding, carried out by means of an encoding assignment circuit 137.

In such a construction, motion compensation of the frame memory 135 is accomplished by a motion vector produced by the motion vector detection circuit 136, which is disposed out of the centre loop shown in Figure 18. As was described above, the motion vector detection circuit 136 requires another frame memory along with the frame memory 135 used for the band compression unit (Figure 18). Thus, two frame memories are required for motion vector detection and band compression.

According to a first aspect of the invention there is provided a motion vector detection apparatus comprising:
delay means for receiving first picture data and for outputting a particular detection range of picture data;
block comparison means for receiving both second picture data with a particular time difference from said first picture data and picture data from said delay means and for detecting a difference between picture data from said delay means and second picture data for each block of P x Q picture elements; and
determination means for determining a degree of matching of a picture of an output signal from the block comparison means;
wherein said delay means comprises
scanning conversion means for converting input picture data from conventional horizontal scanning into scanning within said block, and
a plurality of shift registers for receiving said first picture data with a delay of one frame, the plurality of shift registers being arranged such that both a first block of P x Q picture elements which are earlier than a particular reference tap of the plurality of shift registers and a second block which deviates by i picture elements horizontally and by j picture elements vertically from said first block are set, and such that when said first block does not deviate from said second block, a tap with a delay which is equal to the difference between each picture element of said second block and the reference tap is selected, said second picture data being obtained from said selected tap.

According to a second aspect of the invention there is provided a motion vector detection apparatus comprising:
delay means for receiving first picture data and for outputting a particular detection range of picture data;
block comparison means for receiving both second picture data with a particular time difference from said first picture data and picture data from said delay means and for detecting a difference between picture data from said delay means and second picture data for each block with P x Q picture elements; and
determination means for determining a degree of matching of a picture of an output signal from the block comparison means;
wherein said determination means comprises
means for receiving remainders from said block comparison means and for detecting a minimum value thereof,
means for allocating vectors which are physically adjacent to the detected minimum vector, for calculating the correlation with a reference wave, and for generating an output of a value in accordance with the correlation, and
means for detecting the minimum vector from the output of said correlation calculation as a motion vector or for determining that a motion contour portion is present in a block.

According to a third aspect of the invention there is provided a band compression apparatus providing a combination of motion compensation and an inter-frame encoding scheme, the apparatus comprising:
means for generating a difference between input picture data and picture data with a time difference of one frame;
means for detecting a degree of matching of each of plural blocks of comparison points and thereby detecting a motion vector with the highest degree of matching; and
means for selecting and encoding the difference in accordance with said detected motion vector.

According to a fourth aspect of the invention there is provided a band compression apparatus providing a combination of motion compensation and an inter-frame encoding scheme, the apparatus comprising:
delay means for generating input picture data of the current frame and that of the preceding frame;
means for forming a difference between said current frame and picture data of a plurality of preceding frames which have been encoded in accordance with an orthogonal conversion scheme; and
means for detecting a position which has the highest effect of data compression from said differences and for selectively outputting the difference of the detected position.

Embodiments of the invention described below provide: a motion vector detection apparatus where a delay circuit for detecting a motion vector using a block matching scheme can be readily constructed; a motion vector detection apparatus for detecting a motion vector with easier determination and involving simpler operation than the prior proposals described above; a band compression apparatus sharing one frame memory for detecting a frame difference and a motion vector and thereby reducing hardware scale; and a band compression apparatus optimising a compression process using a diagonal conversion encoding scheme.

The invention will now be further described, by way of illustrative and non-limiting example, with reference to the accompanying drawings, in which:
Figures 1, 2, 3A and 3C, 4 and 5 are schematic diagrams illustrating how motion vectors may be detected;
Figure 6 is a block diagram outlining a motion vector detection apparatus;
Figure 7 is a block diagram of part of a first previously proposed motion vector detection apparatus;
Figure 8 is a block diagram of another part of the previously proposed apparatus;
Figures 9, 10A and 10B are schematic diagrams illustrating the operation of the first previously proposed apparatus and of a second prevously proposed apparatus;
Figures 11A to 11C are timing charts illustrating the operation of the second previously proposed apparatus;
Figure 12 is a partial block diagram of the second previously proposed apparatus;
Figure 13 is a block diagram of a previously proposed determination portion for a motion vector detection apparatus;
Figures 14, 15 and 17 are schematic diagrams used for describing the determination portion;
Figure 16 is a flow chart describing the operation of the previously proposed determination portion;
Figure 18 is a block diagram of a previously proposed band compression apparatus;
Figure 19 is a block diagram of a first embodiment of the invention;
Figures 20 and 21 are schematic diagrams used for describing the operation of the first embodiment;
Figures 22A to 22I are timing charts illustrating the operation of the first embodiment;
Figures 23, 24 and 25 are schematic diagrams used for describing the operation of the first embodiment;
Figures 26 and 27 are block diagrams illustrating the operation of the first embodiment;
Figure 28 is a flow chart illustrating the operation of a second embodiment of the invention;
Figures 29, 30A, 30B, 31A, 31B and 32A to 32C are schematic diagrams illustrating the operation of the second embodiment;
Figure 33 is a block diagram of the second embodiment;
Figure 34 is a block diagram of a third embodiment of the invention;
Figures 35 and 36 are block diagrams of a fourth embodiment of the invention;
Figures 37, 38, 39 and 40A to 40C are schematic diagrams illustrating the operation of the fourth embodiment;
Figures 41 and 42 are block diagrams of the fourth embodiment; and
Figure 43 is a block diagram of a fifth embodiment of the invention.

### SUMMARY OF DISCLOSED EMBODIMENTS

Embodiments of the invention will now be described with reference to the accompanying drawings. The embodiments will be described in the order of: an embodiment suitable for matching blocks; an embodiment suitable for a determination portion of apparatus for detecting a motion vector; and embodiments suitable for inter-frame encoding having frame compensation, namely a band compression apparatus. The respective relevant portions of the following disclosure are headed by titles indicating to which of the foregoing embodiments they relate.

### Block Matching

First, an embodiment suitable for matching blocks will be described. In this embodiment, it is supposed that a scanning sequence transformation of P x Q has been performed upon input data. In other words, the input data has a data sequence as shown in Figure 10B. As was described earlier, it should be noted that the scanning transformation of P x Q does not become a burden upon the apparatus.

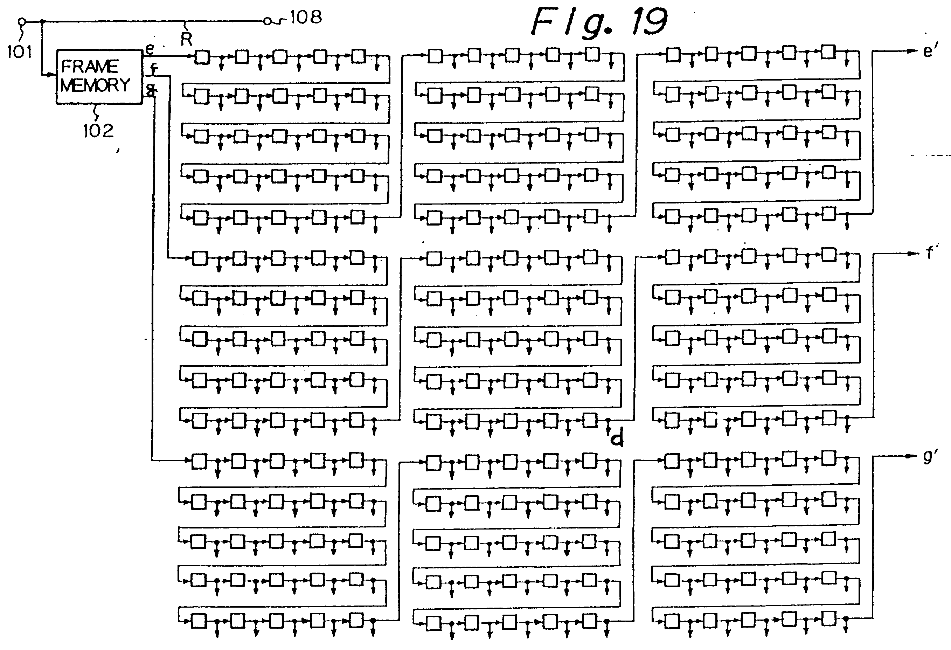

When a circuit as shown in Figure 19 is used, the taps output picture element in such a manner that the output picture elements of R are vertically and horizontally inverted as the just preceding frame.

The frame memory 102 is provided with three outputs. An output e has a delay ($\text{F - 5H - 50}$) which is less than one frame by 5 H and 50 picture elements. An output f has a delay (F - 50) which is less than one frame by 50 picture elements. An output g has a delay ($\text{F + 5H - 50}$) which is greater than one frame by 5 H minus 50 picture elements.

Shift registers are connected to the outputs e, f, and g in such a manner that blocks are scanned. Each of the shift registers has a tap. 50 picture elements are twice as many as P x Q. A tap denoted by d in Figure 14, which is delayed by shift registers for 50 picture elements from the output f, has one frame difference from R.

Although the circuitry as mentioned before can be connected to each of points e', f', and g' in Figure 14, this is not necessary due to a reason which will be described later. In addition, the outputs f and g could be obtained by adding delay circuits to the points e' and f', respectively, though in this embodiment they are obtained from the frame memory 102.

When first data of a particular block of the current frame is present at R, the successive 25 picture elements which are outputted are for this block. At that time, first data of a block of the preceding frame at the same position as the block of the current frame on the screen is present at d. The successive 25 picture elements are data which accord with R in screen positions.

Thus, in the duration of the 25 picture elements, when blocks are compared by the circuit where the memory 112 shown in Figure 8 is used simply as a register, the same matching ratio as the tap C (0, 0) can be obtained.

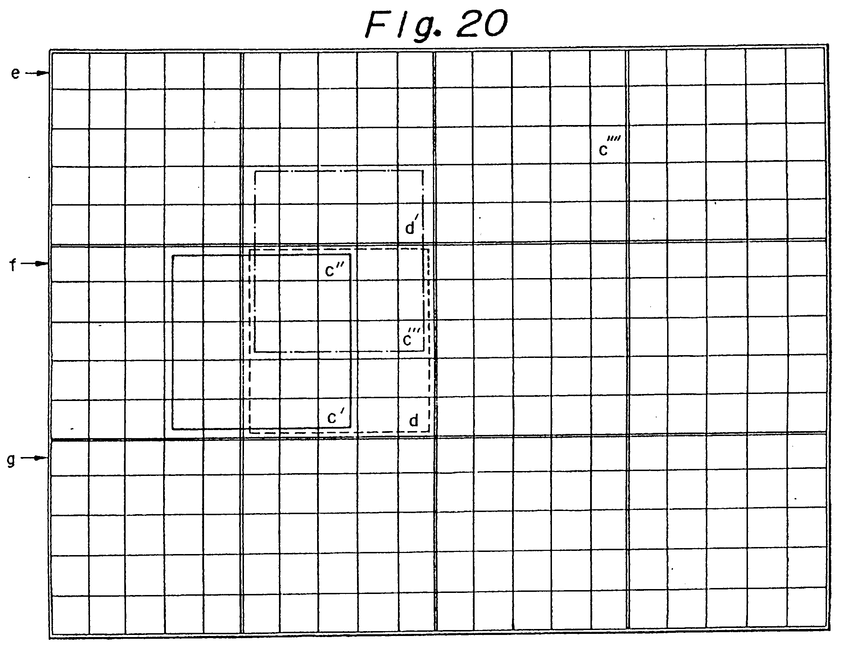

Figure 20 shows an array for each tap shown in Figure 19. In Figure 20, each dual line box represents a shift register for one block ($\text{P x Q = 25 picture elements}$). From now on, it is necessary to consider the circuits to be connected as shown in Figure 19. The rows and lines of picture elements of the schematic diagram of Figure 20 are vertically and horizontally inverted from those of the screen.

Now, consider the case of a deviation of -2 picture elements in the horizontal direction, namely block comparison of C (-2, 0) and R. In this case, consider the situation when first data of a particular block of the current frame is present at B. The 25 picture elements of the preceding frame equivalent to the block are in the registers in the range of a box surrounded by a dotted line. The block which is deviated by -2 picture elements in the horizontal direction is in the registers in the range of a box surrounded by a solid line. This range is divided by a dual line. Since the shift registers are not horizontally connected by the dual line, it is necessary to separately consider the right hand side and the left hand side of the dual line.

First, on the right hand side, the tap C' which is deviated by -2 picture elements from the tap d shown in Figure 19 can be used as the tap C (-2, 0). However, at the tap C', the 3 picture elements following the first picture element of the block are valid. Thereafter, the successive 2 picture elements are out of the range. Thereafter, the successive 3 picture elements are valid. Thereafter, the successive 2 picture elements are out of the range.

Then, with respect to the left hand side portion, when the picture element at the rightmost and lowermost position thereof is considered, at the third cycle, the first data of the block which was at C' should be present at the tap C'. However, the first data is actually present at the tap C''. Thus, on the left hand side, it is clear that C'' can be used as the tap. When the tap C' is out of the range of the box surrounded by the solid line, C' and C'' should be selected so that C'' is selected.

In conclusion, when blocks are matched in the state where they are deviated by -i picture element (where 0 < i <₌ S) in the horizontal direction, by using a tap of a shift register earlier than d by i taps and another tap earlier than d by $\text{P x Q - i}$ and selecting these taps every (P - i)th cycle and i-th cycle, the required data can be supplied to the comparison circuit.

Likewise, consider the case where a block is deviated by -2 picture elements in the vertical direction. In this case, the range of a box surrounded by a chain-dotted line should be considered as the preceding block to be compared. This block is divided by different shift register groups. However, even in this case, employing the same consideration, it is possible to select C''' and C''''.

In other words, in matching blocks which are deviated by -j picture elements (where 0 < j <₌ T) in the vertical direction, a tap which is earlier than d by j x Q taps and another tap which is earlier than d by {$\text{H x Q - (Q - j) x P}$} (in other words, the former tap is a tap which is later by $\text{(Q - j) x P}$ taps than d', which has a delay from e, the delay being the same as that from f to d) are switched by the former j x P cycles and the later $\text{(Q - j) x P}$ cycles.

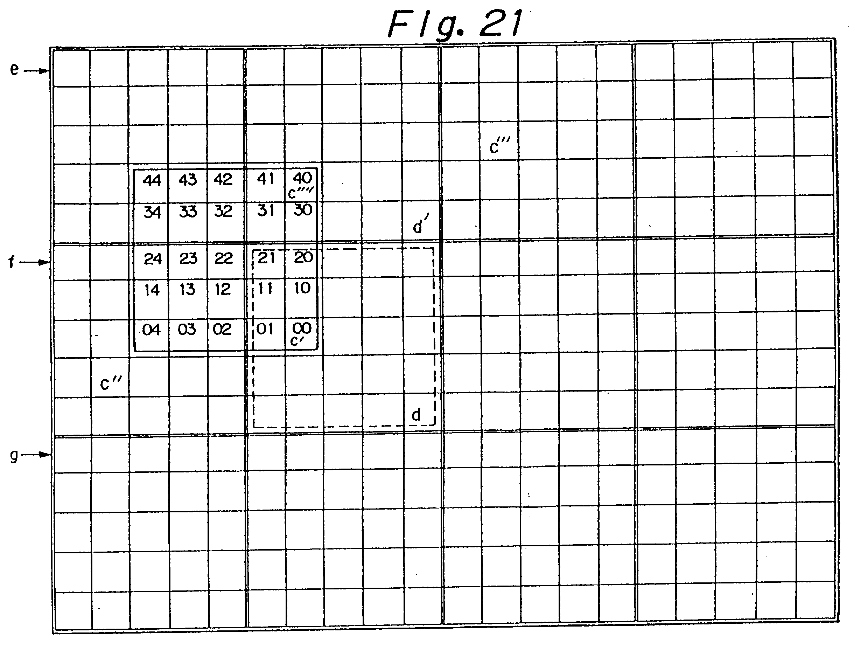

More broadly, consider the general case where a block is deviated by -i picture elements and -j picture elements in the horizontal and vertical directions, respectively. For example, consider a case where a block is deviated by -3 picture elements and -2 picture elements in the horizontal and vertical directions, respectively. In this case, the range is represented by solid lines in Figure 21. This range should be compared with another range represented by dotted lines for R.

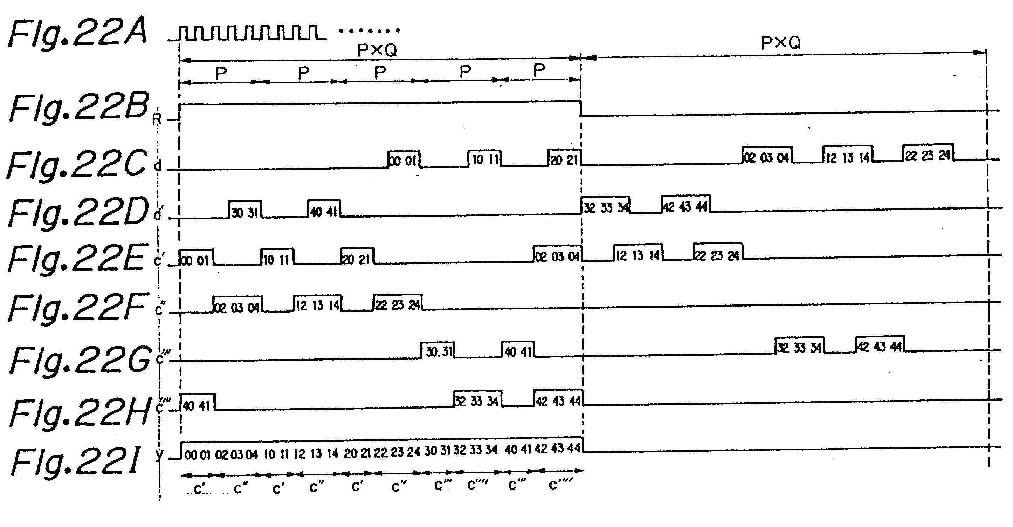

The range represented by the solid lines in Figure 21 is divided by both a dual line in the vertical direction a dual line in the horizontal direction. Thus, the range is divided into four portions. When this range is considered with the connections of the shift registers shown in Figure 19, the shift registers are separated at many positions. Figure 22 shows how the shift registers are separated.

Figure 22A shows a clock signal. In R shown in Figure 22B, the timing where data of the current frame in the range represented by the dotted lines in Figure 21 is represented by "H". This timing continues for $\text{P x Q = 25}$ cycles. The data of the range represented by the solid lines in Figure 21 is represented as d and d' in Figures 22C and 22D, respectively.

Numbers 00 to 44 used in Figure 22 represent where each picture element of the block to be compared in Figure 21 is in the first cycle of Figure 22 when the first picture element of the block is present in R. When 25 picture elements denoted by 00 to 44 are disposed as shown at y in Figure 22I, they cannot be compared with R by the calculation unit shown in Figure 8.

The range represented by the solid lines in Figure 21 can be divided by the two dual lines into a lower right portion, a lower left portion, an upper right portion, and an upper left portion. The lower right portion consists of the picture elements 00, 01, 10, 11, 20 and 21. These picture elements are matched with the data sequence of R at the tap C'.

The lower left portion consists of the picture elements 02, 03, 04, 12, 13, 14, 22, 23 and 24. These picture elements are matched with R at the tap C'' according to the same consideration as the case where the block is deviated only in the horizontal direction.

The upper right portion consists of the picture elements 30, 31, 40 and 41. These picture elements are matched with R at the tap C''' according to the same consideration as the case where the block is deviated only in the vertical direction.

The upper left portion consists of the picture elements 32, 33, 34, 42, 43 and 44. The picture element 32, for example, is deviated from the position 00 on the screen by -2 picture elements and -3 picture elements in the horizontal and vertical directions, respectively. When the block is not moved from one shift register group like the range represented by the dotted line, the picture element 32 is at a position which is earlier than the position 00 by 17 stages. Thus, the tap C'''' which is later than the picture element 32 by 17 stages can be used.

The above description can be simplified with reference to the timing charts shown in Figure 22. The relationships between C', C'', C''' and C'''' and d and d' are time delays. Thus, according to intervals of stages of shift registers, C', C'', C''' and C'''' shown in Figures 22F, 22G and 22H can be obtained. For the data sequence of y, C' to C'''' are selected at the timing shown in Figure 22I.

Generally, when a block is compared with another block which is deviated by -i picture elements (where 0 < i <₌ S) in the horizontal direction and by -j picture elements (where 0 < j <₌ T) in the vertical direction, by using
(1) a tap which is earlier than d by ($\text{j x P + i}$) stages and which is represented as C',
(2) a tap which is earlier than d by {$\text{(P x Q + j x P) - (P - i)}$} stages and which is represented as C'',
(3) a tap which is later than d' by {$\text{j x P - (P - i)}$} stages and which is represented as C''', and
(4) a tap which is earlier than d' by $\text{P x Q - {(Q - j) x P + (P - j)}}$ stages and which is represented as C'''', and properly selecting an output, the output is compared with the R output. The selection procedure is as follows:
   (i) in the range from the start of the block to $\text{(Q - j) x P}$ cycles thereof, C' and C'' are selected at the (P - i) cycles and i cycles, respectively, and
   (ii) in the remaining j x P cycles, C'' and C'''' are selected at the (P - i) cycles and i cycles, respectively.

The above-mentioned operations can be summarised as follows.

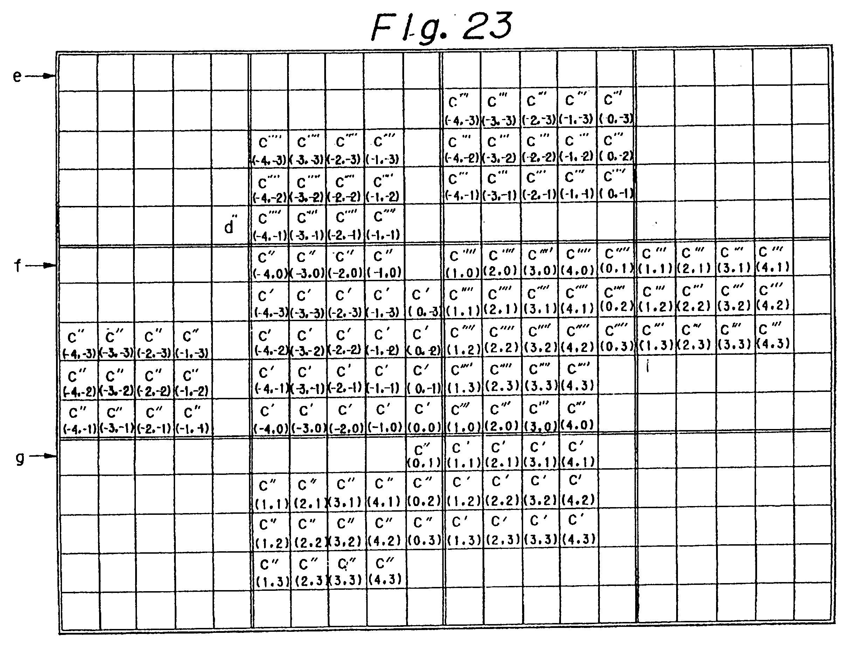

When a block is compared with another block which is deviated by -i picture elements and -j picture elements in the horizontal and vertical directions, respectively (where 0 <₌ i <₌ S and 0 <₌ j <₌ T), a required data sequence can be obtained by switching at most the four taps C' (-i, -j), C'' (-i, -j), C''' (-i, -j) and C'''' (-i, -j) shown in Figure 23.

In Figure 23, the position of d is at C' (0, 0). In addition, in the embodiment described so far, cases where blocks are deviated negatively in both the horizontal and vertical directions were considered. However, cases in which blocks are positively deviated in both the horizontal and vertical directions can be considered in the same manner. Figure 23 shows the taps necessary in a case where blocks are deviated positively in both the horizontal and vertical directions. Since taps necessary for a case where a block is deviated positively in the horizontal direction and negatively in the vertical direction overlap with those required for other purposes, they are omitted.

In Figure 23: at the input e, shift registers for 3 blocks are required; at the input f, shift registers for 4 blocks are required; and at the input g, shift registers for 3 blocks are required. However, it is possible technically to decrease the number of shift registers.

For example, in Figure 23, the position of C' (0, 0) is used as a reference in both the case where a block is deviated positively and the case where a block is deviated negatively. When the reference is moved to the position d'' shown in Figure 23, most of the taps necessary for the case where the block is positively deviated can be used in common with those necessary for the case where it is negatively deviated.

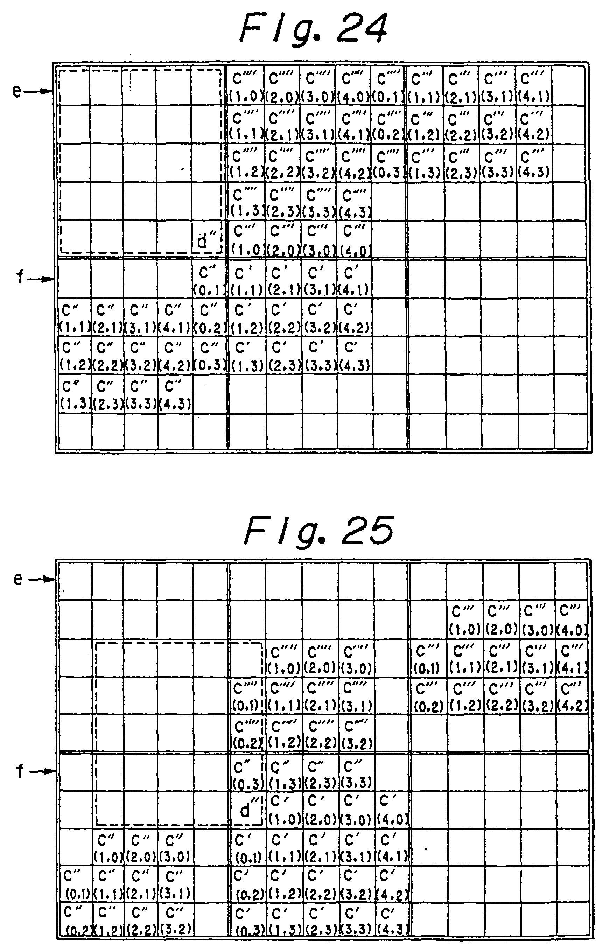

When a block is positively deviated and taps are obtained as shown in Figure 24, shift registers at least necessary for g become unnecessary in consideration of Figure 23. However, although this may apparently be correct, when the reference is changed from the position d to the position d'' the taps should be changed depending on whether the block of R is deviated positively or negatively. When the block is positively deviated, taps with a delay amount which is earlier than R by the delay difference between d and d' should be provided. Thus, in comparison with the shift registers which can be omitted for g, a remarkable advantage cannot be obtained.

For example, in Figure 24, even in a case where a block is deviated positively in both the horizontal and vertical directions, the same position as a case where a block is deviated negatively in both the horizontal and vertical directions, namely the position C' (0, 0), is used as a reference. However, then this reference is moved to the position d'' shown in Figure 25, all the taps necessary for the case where the block is deviated positively in both the horizontal and vertical directions can become in common with those necessary for the case where the block is deviated negatively in both the horizontal and vertical directions.

The position d'' shown in Figure 25 is a position where the block is deviated from the position d by $\text{i = S = 4}$ and $\text{j = T = 3}$, which are maximally deviated picture elements. When the position d'' is used as the reference position, the taps in the case where the block is deviated negatively in both the horizontal and vertical directions can be used.

Likewise, in a case where a block is deviated positively in the horizontal direction and negatively in the vertical direction, or vice versa, when taps are obtained as shown in Figure 25 the shift registers with respect to g are not required in consideration of Figure 23. In addition, the shift registers required with respect to f are only for two blocks. However, in a case where a block is deviated positively in both the horizontal and vertical directions, since the reference position is changed from d to d'', it is necessary to provide taps with a delay amount of a tap earlier than R for a delay difference between d and d' while the block of R is deviated negatively in both the horizontal and vertical directions. However, the size of the delay circuit necessary for the above-mentioned operation is small.

Since the shift registers with respect to e are not connected for the first one block, they can be omitted.

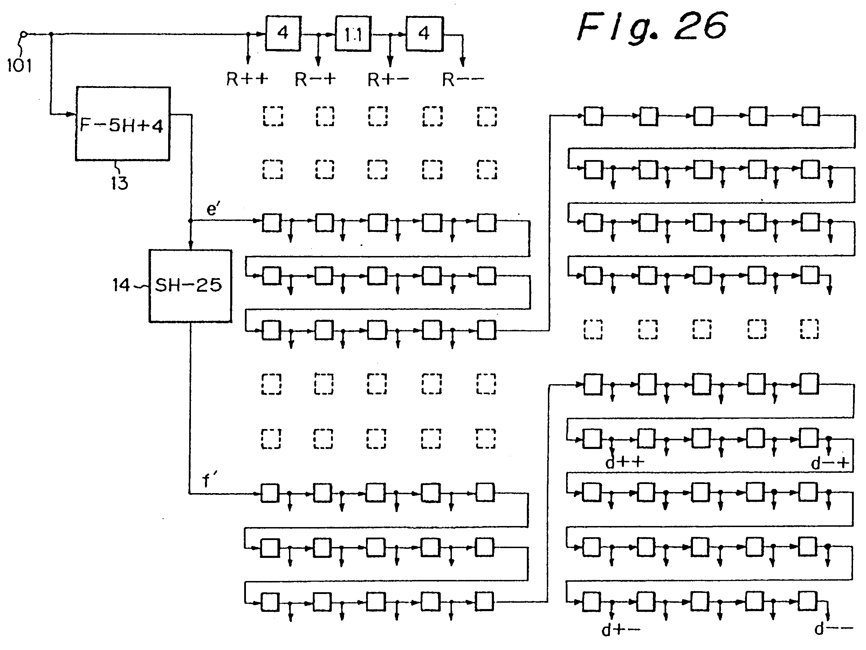

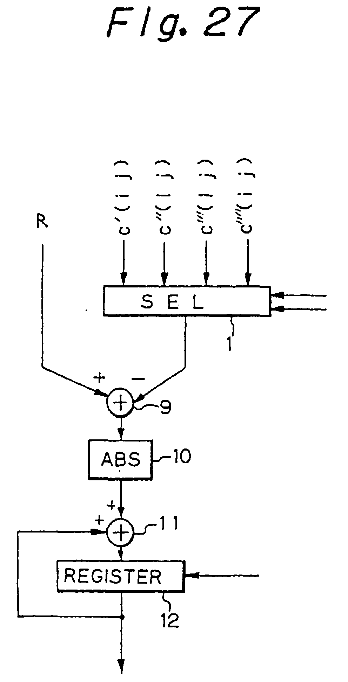

As was described above, the present embodiment can be constructed of frame memories 13 and 14 and a delay portion shown in Figure 26 and a block comparison portion shown in Figure 27.

In conclusion, as shown in Figure 26, depending on whether a block which is deviated in the vertical and horizontal directions is positive or negative, R can be categorised as of four types: R ++, R -+, R +- and R --.

Since the reference positions of such types are d ++, d -+, d +-and d -- shown in Figure 26, the delay differences among them are compensated. In other words, the delay difference between R ++ and R -+ becomes just S (= 4 picture elements), while that between R +- and R -- becomes $\text{TP + S ( = 3 x 5 + 4 = 19 picture elements)}$. The shift registers connected to the outputs e, f, and g shown in Figure 19 are those connected to e' and f'.

As shown in Figure 25, the output e' is not connected to taps for the first block. Thus, they are omitted. Instead, the frame memory is correspondingly delayed. In addition, with respect to the next block, 10 picture elements of the first two lines are not used. Thus, the frame memory is also delayed. Moreover, shift registers with respect to the output g are not necessary. Figure 26 does not show them. The small blocks represented by dotted lines in Figure 26 are unnecessary shift registers and they are thus omitted.

The delay difference between the output e' and the output f' is normally Q lines, namely Q x H picture elements. However, since the first block of the shift registers connected to the output e' is omitted, a delay of $\text{Q x H - P x Q = 5H - 25}$ picture elements takes place. The frame memory should be constructed so that the difference between R -- and d -- becomes one frame (F) and thereby should be $\text{F - 2 (PQ) + (TP + S) - (QH - PQ) + 10 = F - 5H + 4}$.

Blocks are compared by using a circuit shown in Figure 27. In other words, a cumulative unit comprising a substraction circuit 9 for subtracting data selected by a selector 1 from R, an absolute value (ABS) calculation circuit 10, an addition circuit 11, and a register 12 is used.

With respect to R, for a case where a block is deviated by i picture elements in the horizontal direction and by j picture elements in the vertical direction: when i is positive and j is positive, R ++ is used; when i is negative and j is positive, R -+ is used; when i is positive and j is negative, R +- is used; and when i is negative and j is negative, R -- is used.

Up to four taps C' (i, j), C'' (i, j), C''' (i, j) and C'''' (i, j) are connected to the selector 1. One of them is selected by a method as was described with reference to Figure 22. The difference between frames is obtained. Thereafter, its absolute value (or its square value or the like) is calculated. Thereafter, data for one block is accumulated.

In the above described embodiment, a case where S <₌ P and T <₌ Q was considered. When other cases are considered, the construction will become more complicated. However, simply by extension in the same manner, such cases can be accomplished.

A block comparison calculation circuit as shown in Figure 27 is required for each deviation amount (i, j). However, as was described earlier, part of them may be omitted. In addition, when the calculation speed can be increased by for example n times with respect to the data rate and the calculation unit, n sets of the amounts (i, j) can be time multiplexed to be processed in one calculation circuit. With this construction, therefore, the number of calculation units can be decreased by a factor of 1/n.

In the above-described embodiment, a picture which is not interlaced was considered. However, the present invention can be applied to a case where a picture is interlaced. However, when a motion vector between interlaced fields is obtained, j in the above-mentioned deviation (i, j) has an offset of 0.5 picture elements.

### Motor Vector Determination

An embodiment which simplifies a determination procedure for detecting a motion vector, in accordance with a result of block matching obtained in the above-described embodiment, will now be described.

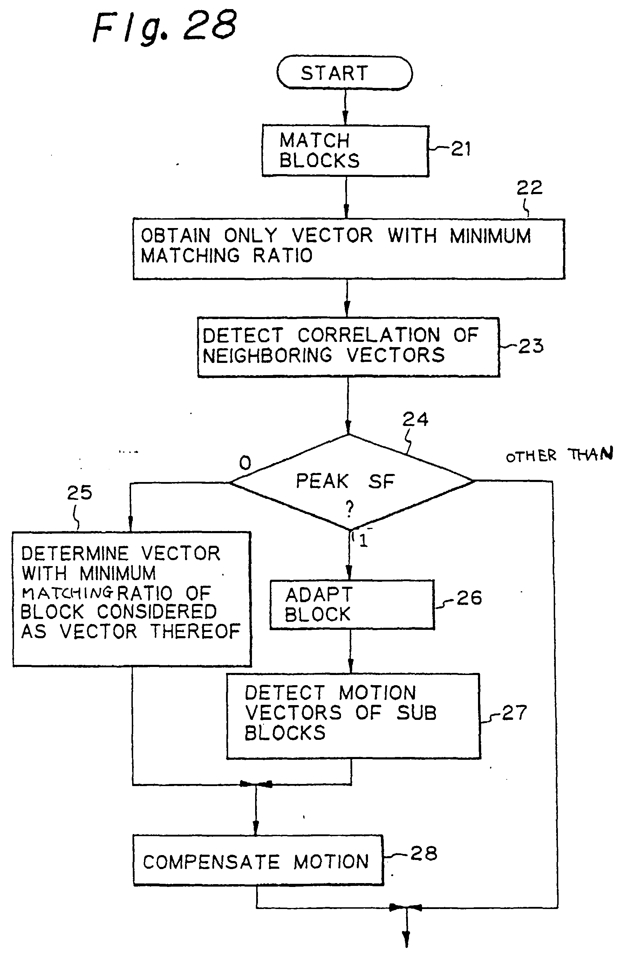

Figure 28 shows a procedure according to the present embodiment. As opposed to the prior proposal shown in Figure 16, the distribution of the matching ratio, namely various minimum values, are not detected.

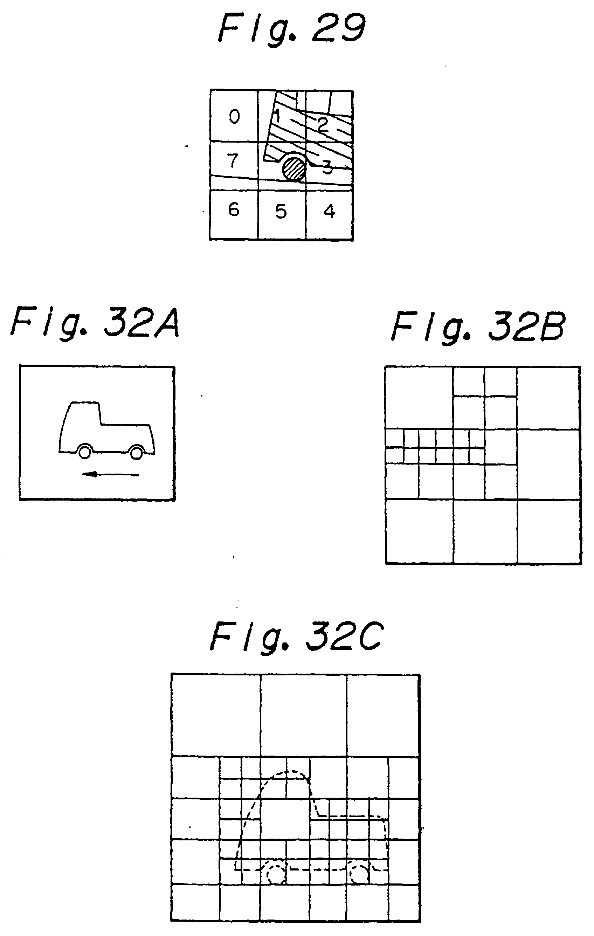

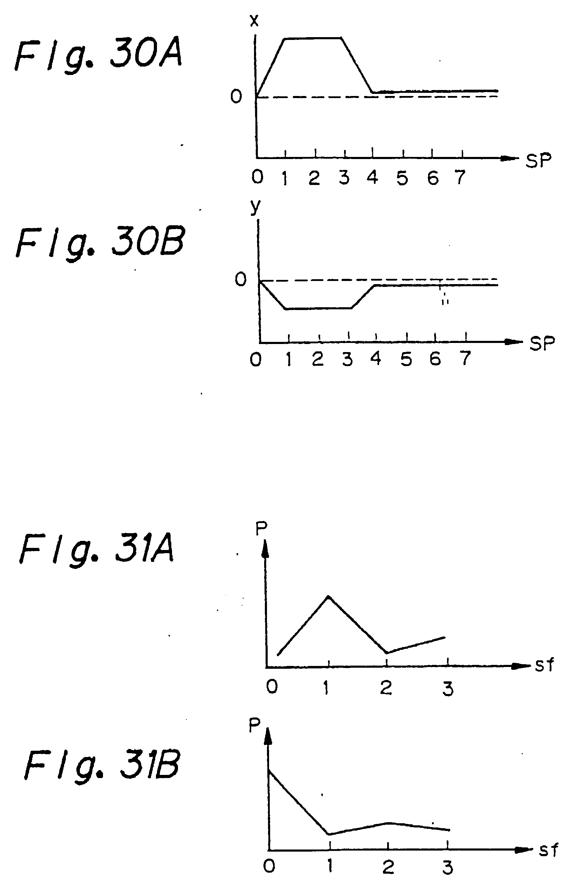

After blocks are matched in a step 21, the vector amount (x, y) with the minimum matching ratio is obtained in a step 22. Thereafter, the correlation of neighbouring (physically adjacent) vectors is obtained in a step 23. In other words, with respect to the vector with the minimum matching degree (xi, yi) (where i = the block number) of the eight neighbouring blocks, the block under consideration is Fourier transformed (for example). x and y represent the horizontal and vertical directions, respectively. Now, assume that the block D-b shown in Figure 14 is under consideration. The eight blocks neighbouring the block D-b are numbered therearound as shown in Figure 29 (in any direction and starting from any block). The block number assigned to each neighbouring block is denoted by i. In the case as shown in Figure 29, for example, waveforms as shown in Figures 30A and 30B are obtained. In Figures 30A and 30B, the horizontal axis represents a spatial position (SP), which in practice is the number i. On the other hand, the vertical axis represents an x component or a y component of a motion vector. Figure 30A represents the x component of the motion vector and Figure 30B represents the y component of the motion vector. When an automobile travels to the right in Figure 14 (assuming that, when it travels to the right, x is positive and that, when it travels upwardly, y is positive), the waveforms as shown in Figures 30A and 30B are obtained.

In the case shown in Figure 29, i = 1 and i = 3 for the blocks C-b and D-c, respectively. Since these blocks contain a contour, it cannot be determined whether motion vectors are for the background or the automobile. However, when the waveforms shown in Figures 30A and 30B are obtained, they are frequency analysed by Fourier transformation, whereby a result as shown in Figure 31A will be obtained. Figure 31A represents a power spectrum where the waveforms have been Fourier transformed. In Figure 31A, since one fundamental wave is present, one peak occurs at a position 1 of spatial frequency (sf) on the horizontal axis.

Figure 31B shows for example a case of only background or inside a contour of a large moving portion, where vectors with the minimum matching ratio of the neighbouring blocks of a block under consideration are nearly the same, namely sf = 0. Thus, in Figure 31B, a peak takes place at the DC component.

After the Fourier transformation is performed, a frequency component with one or more particular levels is found for the data shown in Figures 31A and 31B. Thereafter, the frequency component is categorised by the spatial frequency (in a step 24 in Figure 28).

When there is a peak in the DC component as shown in Figure 31B, since motion vectors of the blocks neighbouring the block under consideration are nearly the same, it is supposed that the block under consideration is the same as the neighbouring blocks. This, it is supposed (in a step 25) that the motion vector is a vector with the minimum matching ratio of the block under consideration. When the block under consideration is an isolated motion subject, the vector of the block under consideration may differ from those of the neighbouring blocks. However, since it is difficult to detect an isolated motion subject, whether the vector with the minimum matching ratio relates to the motion subject or is the same as the neighbouring blocks should be determined in dependence upon the magnitude of the matching ratio. Thus, it seems that no special problem takes place.

As shown in Figure 31A, when there is a peak at sf = 1, motion vectors of the blocks neighbouring the block under consideration have one wave change in one cycle. This means that the block under consideration is located at a contour of the motion subject. In this case, two motion vectors should be present in this block. Thus, in this situation only, the block is adaptively divided or segmented (in a step 26) into four portions so as to make four sub-blocks. Thereafter, the motion vectors of these sub-blocks are detected (in a step 27). However, in this case, it Is not necessary to perform the block matching once again. In other words, it is obvious that the vector to be obtained is in the vicinity of a group of two types of vectors which are present in the neighbouring blocks. Thus, since the block matching is performed in a very limited range, its operation is simplified.

After the steps 25 and 27 are performed, the motion compensation is performed (in a step 28). However, when the output of the Fourier transformation does not match the waveforms as shown in Figure 31, the motion vectors cannot be detected. In this event, the motion compensation is cancelled.

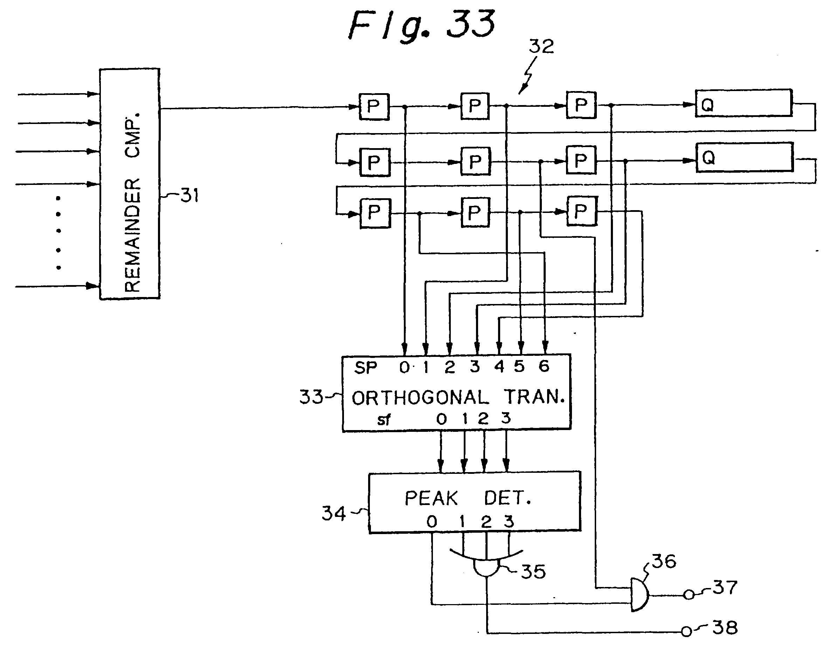

Figures 32A to 32C are schematic diagrams illustrating adaptive block segmentation. In the case where an automobile which is a motion subject travels as shown in Figure 32A, when a peak is detected at sf = 1 to 3 in the determination effected in the step 24, the neighbouring blocks are segmented locally into sub-blocks as shown in Figure 32B. As shown in Figure 32C, the motion vector is recursively detected for each sub-block.

Figure 33 shows an example of construction of a determination portion for carrying out the above-described motion vector determination procedure. A remainder comparison circuit 31 detects a position of deviation where the remainder per block is minimum. The result is outputted as a temporary motion vector, which is supplied to a delay circuit group 32. The delay circuit group 32 comprises registers P for storing a temporary motion vector and shift registers Q for storing a temporary motion vector with picture elements less than the block by 3 picture elements in the horizontal direction. The determination portion further comprises an orthogonal transformation circuit 33, for performing a transformation such as Fourier transformation on spatial position (SP) outputs of the delay circuit group 32, and a peak detection circuit 34 for receiving spatial frequency (sf) outputs of the circuit 33. At an output terminal 38 of an OR gate 35, a determination signal for determining whether there are peaks at sf = 1, 2 and 3 is obtained. The determination signal is supplied to a sub-block segmentation circuit. At an output terminal 37 of an AND gate 36, a motion vector is outputted.

Instead of the Fourier transformation described above, an alternative transformation such as a Hadamard transformation, a Hartley transformation or the like can be used. In other words, various wave numbers and the reference wave are correlatively calculated so as to find which wave number has the highest correlation with the reference wave.

In the particular case of using the Fourier transformation, in view of the fact that this transformation requires many multiplications it would seem prima facie that the transformation apparently requires complicated operations. However, the Fourier transformation can always be calculated in eight degrees. It is widely known that by employing the Fast Fourier Transformation (FFT) method, many multiplications are not used for the operations in eight degrees; instead, many additions are used. Thus, use of the Fourier transformation does not involve a problem. On the other hand, in the Hadamard transformation, since the coefficients are 1 or 0, the operations can be more simplified.

The procedure shown in Figure 28 is simpler than a conventional process and does not require complicated determinations.

### Inter-Frame Encoding having Frame Compensation

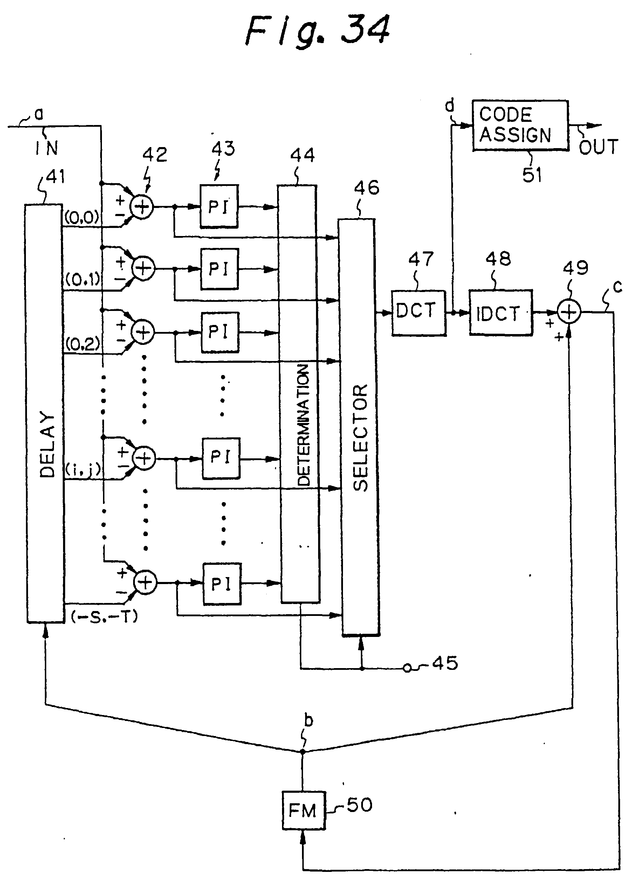

An embodiment which involves a combination of motion vector compensation and a frame differential encoding method will now be described with reference to Figure 34, which shows apparatus according to this embodiment.

The apparatus shown in Figure 34 includes a delay portion 41 for performing block matching as described above in the first embodiment, a subtraction circuit group 42, and a power integration (PI) circuit group 43 which comprises a multiplication circuit for squaring a value and a portion for accumulating the output thereof. The output of the power integration circuit group 43 is supplied to a determination portion 44. The subtraction circuit group 42 and the power integration circuit group 43 are provided for each of (i, j) (where $\text{i = -S to +S}$ and $\text{j = -T to +T}$), making a total of $\text{(2S + 1) x (2T + 1)}$. The determination portion 44 selects a frame difference of deviation amount with the minimum power difference. A motion vector being detected is obtained at an output terminal 45.

A selector 46 is connected to the subtraction circuit group 42. An output of the selector 46 is supplied to a transformation circuit (illustratively a DCT circuit) 47. The output d of the transformation circuit 47 is supplied through a sign (code) assignment circuit 51 as an encoded output. In addition, the output d of the transformation circuit 47 is also supplied to an addition circuit 49 through an inverse transformation circuit (illustratively an IDCT circuit) 48. An output signal c of the addition circuit 49 is supplied to a frame memory (FM) 50. An output b of the frame memory 50 is supplied to the delay circuit 41 and the addition circuit 49.

The difference between the construction of the present embodiment and that of the prior proposal described above with reference to Figure 18 is that the portion for detecting a motion vector is disposed in the encoding circuit loop.

When a method for decreasing motion vectors to be detected is used, or when they are obtained with a real number, rather than an integer number by using $\text{(2S + 1) x (2T + 1)}$ calculation circuits shown in Figure 34, the selector 46 should be provided with a variable delay circuit. In this construction, the delay amount of the variable delay circuit can be controlled to take account of the motion vectors being decreased. In addition, it is possible to connect a delay circuit having an interpolation calculation circuit, for example a linear interpolation circuit, to the selector 46, so as to obtain a frame difference at a desired deviated position. Moreover, it is possible to use a combination of the above two constructions.

The band compression apparatus according to the present embodiment requires only one frame memory, whereby the size of the apparatus is reduced. In addition, address control (delay amount control) of the frame memory is not required. Although the selector is newly added in comparison with the prior art, it does not markedly increase the amount of hardware.

Although only the DCT transformation circuit 47 and the inverse transformation circuit 48 are provided in the loop shown in Figure 34, it is possible to include various other processes therein. However, since such processes are incidental to the present embodiment, they are not described. In addition, although the block comparison (matching ratio calculation) circuit uses a power (square), it may be accomplished with an absolute value or another non-linear type calculation. Moreover, known methods for decreasing motion vectors being detected can also be used in the present embodiment.

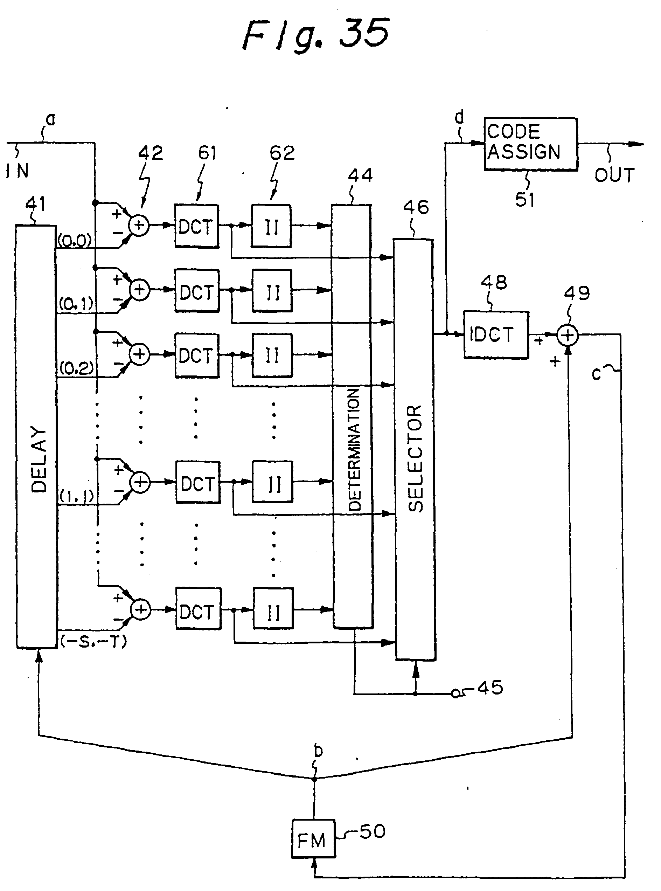

Another embodiment of a band compression apparatus involving a frame difference encoding method in combination with motion compensation will now be described. Figure 35 shows the construction of this embodiment, from which figure it will be seen that the transformation circuit 47 of the embodiment shown in Figure 34 is disposed in a portion for detecting a motion vector (transformation circuit group 61). Thus, the overall construction shown in Figure 35 is nearly the same as that shown in Figure 34. The differences between them will now be described.

Although a data amount detection circuit group 62 comprising blocks designated II in Figure 35 can be of the same construction as the power integration circuit 43 (PI) shown in Figure 34, it should detect the amount of data which has been band-compressed by DCT so as to perform the band compression more properly. For example, the amount of data is an integration of an absolute value, the number of items of data of which are not 0, "1" of each bit in binary notation, or the like. The output of the data amount detection circuit group 62 is supplied to a determination portion 44.

Transformation circuits (designated DCT) making up the transformation circuit group 61 perform at least DCT. In combination with the DCT, the transformation circuits may employ a band compression technique such as a zigzag transformation which can be used along with the DCT. However, in this case, in the inverse transformation circuit 48, the inverse procedure should be performed.

The construction shown in Figure 35 can compensate the motion vectors more suitably for band compression than that shown in Figure 34.

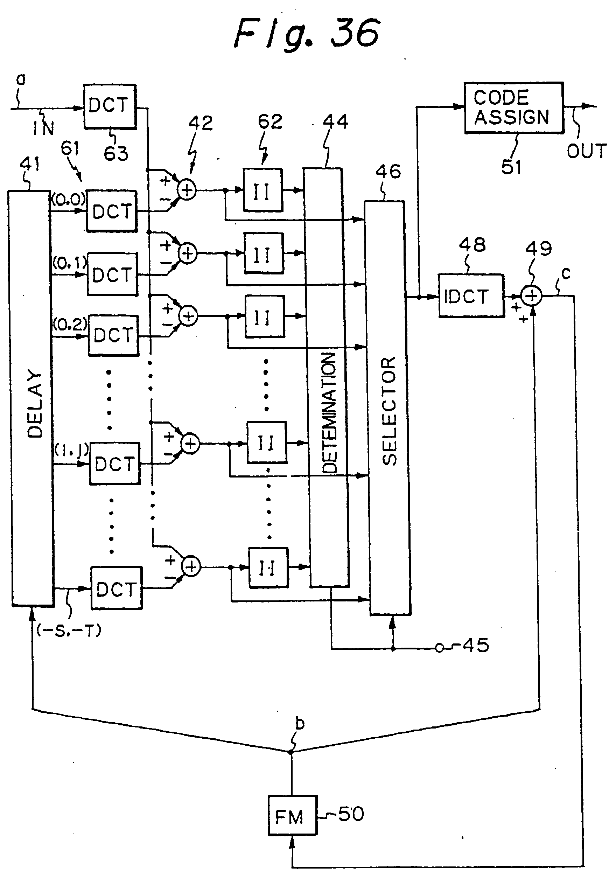

The DCT circuits used in the construction shown in Figure 35 performs a linear calculation, namely an interpolation calculation (matrix calculation). Thus, the result is the same regardless of whether the frame difference has been obtained. Thus, it should be appreciated that the construction shown in Figure 35 can be substituted into that shown in Figure 36. The transformation circuit group 61 in Figure 36 is disposed at a position closer to the delay portion 41 than in Figure 35.

When the transformation circuit group 61 is disposed in the motion vector detection circuit as shown in Figures 35 and 36, the amount of calculation involved in the DCT disadvantageously increases. However, it does not become a burden on the hardware, for the following reason.

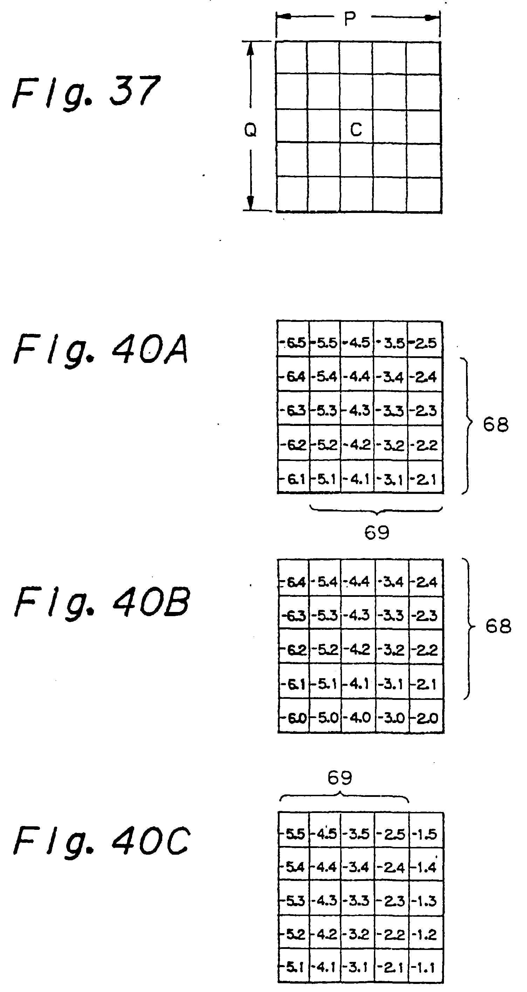

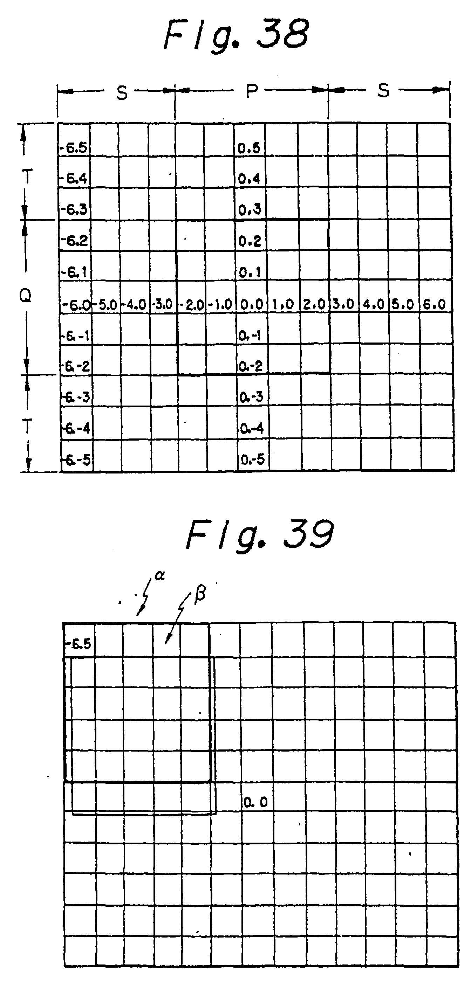

As was described earlier, a picture is block segmented into P picture elements by Q picture elements in the horizontal and vertical directions, respectively, as shown in Figure 37. In this example, it is assumed that P = 5 and Q = 5. In addition, it is assumed that a motion vector is in the range where the block is deviated by ± S picture elements and ± T picture elements in the horizontal and vertical directions, respectively. Further, it is assumed that S = 4 and T = 3.

Thus, when the block of P by Q picture elements of the current frame is represented by inner solid lines in Figure 38, outer solid lines in Figure 38 represent the range of picture elements of the preceding frame which is used in comparing the blocks. In Figure 38, the coordinates of each picture element are shown relative to the centre, which is positioned at coordinates 0, 0 (x = 0, y = 0). However, the coordinates of most of the picture elements are omitted in the figure.

### (1) (Vertical)

Consider, for example, the case where one frame is deviated by 4 picture elements in the horizontal direction from the left to the right and by 3 picture elements in the downward vertical direction. The block of the current frame, which is the box represented by the inner solid lines of Figure 38, is compared with the block of the preceding frame of P x Q picture elements of a box α represented by solid lines in Figure 39. In other words, a block with coordinates as shown in Figure 40A is used.

When blocks are compared in the case where one frame is deviated by 4 picture elements in the horizontal direction from left to the right and by 2 picture elements in the downward vertical direction, a block β represented by solid lines in Figure 39 is compared. In other words, a block with coordinates shown in Figure 40B is used.

When blocks are compared in the case where one frame is not deviated in the horizontal direction, but deviated in the vertical direction, it is necessary to consider the following.

In the comparison between DCT of the block α and that of the block β, the following results will emerge. Although the DCT is performed two-dimensionally, a block is transformed in the horizontal direction and then in the vertical direction. A 5-line picture element group which is transformed in the horizontal direction of the block shown in Figure 40A is transformed in the horizontal direction of the block β.

A 5-line picture element group shown in Figure 40B as denoted by the reference numeral 68 overlaps with that shown in Figure 40A over 4 lines. Thus, when the 4 lines have been calculated for the block α, it is not necessary to calculate them for the block β.

In conclusion, in comparing blocks which are not deviated in the horizontal direction, but only in the vertical direction, calculations of their transformations in the horizontal direction can be omitted to a marked extent.

### (2) Horizontal

Consider now the case where one frame is deviated by 3 picture elements in the horizontal direction from the left to the right and by 3 picture elements in the downward vertical direction. In this case, a block of the current frame which is represented by the solid lines in Figure 38 and a block α of the preceding frame which is deviated to the right by 1 picture element are compared. In other words, a block with coordinates as shown in Figure 40C is used. When the data block as shown in Figure 40C is compared with that shown in Figure 40A, the former does not have the data at the left hand end of the latter, while the latter does not have data at the right hand end of the former.

A method of Fourier transformation is described in Takeya Ankyoin et al, "High Speed Solution for Overlapped Data" in "How to Use FFT", Sanpo-Shuppan, pp 132-133. Thus, in the case where the horizontal direction of the two-dimensional DCT is first transformed, when the transformation of data of the block α as shown in Figure 40A has been calculated, as shown by the reference numeral 69, the transformation of the block which is deviated to the right by 1 picture element can be obtained with a simple operation without new calculations for the transformation. Although the above-cited document deals with Fourier transformation, the theory can also be applied to cosine transformation.

The first horizontal transformation of the two-dimensional DCT has now been described. The above-mentioned method can be extended to two dimensions and thereby remarkably decrease the calculations. Although the amount of calculation hardware shown in Figure 35 is much larger than that shown in Figure 34, the construction shown in Figure 36 can greatly reduce the calculations. Thus, although the size of the hardware is increased, since the DCT is included in the motion vector control a significant advantage is produced.

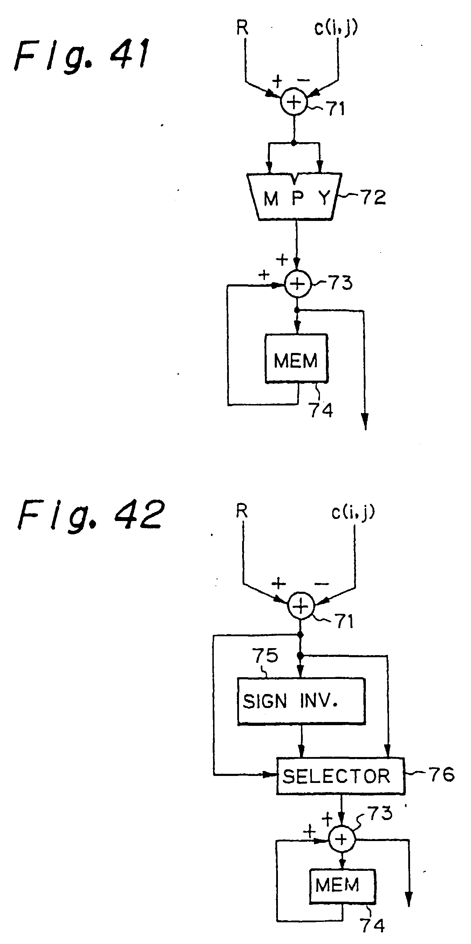

A comparison of the calculations necessary in the above-described constructions will now be given. When the symbol PI in Figure 34 represents a square integration, the construction thereof is represented by a circuit as shown in Figure 41. In order words, an output of a subtraction circuit 71 is squared by a multiplier 72. The squared output is accumulated by an addition circuit 73 and a memory 74. On the other hand, when an absolute integration is performed, a circuit as shown in Figure 42 is used. In Figure 42, an output of a subtraction circuit 71 is squared by a multiplier 72. The squared output is supplied to a sign inversion circuit 75 and a selector 76. The output of the selector 76 is accumulated as in Figure 41. In integrating one block of P x Q picture elements of the current frame, P x Q calculations are performed and accumulated for $\text{(2S + 1) x (2T + 1)}$. In total, $\text{P x Q x (2S + 1) x (2T +1)}$ calculations are required. For each picture element, $\text{(2S + 1) x (2T + 1)}$ are required.

The DCT can be calculated with a sum-of-products circuit. For each block of P x Q picture elements of the current frame, ${\text{P x Q x P}}^{\text{2}} \text{Q}$ calculations are required. Thus, for each picture element, P calculations are required.

In Figure 36, the portions designated DCT perform DCT only. The data mount detection circuits II are the same as the power integration circuits PI. In this case, the calculations of the data amount detection circuits II are the same as those of the power integration circuits PI because the amount of data is not changed by the DCT.

When the DCT calculations are considered, since there are {$\text{(2S + 1) x (2T + 1) + 1}$} DCT circuits in Figure 36, for each picture element a huge number of calculations, namely $\text{{(2S + 1) x (2T + 1) + 1} x P}$, are required. However, as was described earlier, it is not necessary to perform all of such huge number of calculations. Instead, two DCT calculation circuits are required at least for the side a and the side b. In other words, although two or more DCT calculation circuits used in Figure 34 are required, the amount of hardware thereof is within a practical limit.

In addition, at the DCT output, the frequency of the data is analysed as if the data had passed through a filter bank. This is an important new feature.

For example, in band compression, some frequency components may be removed from the DCT output. Thus, the data mount detection circuits II, which are PI, can omit the calculations for such frequency components. Thus, the number of calculations is decreased.

Since the DCT disposed at the input a knows each frequency component of the input data, it determines the DCT output and finds frequency components which it is not necessary for the circuits II to calculate, thereby decreasing the number of calculations.

In addition, since the high frequency components of a block do not markedly affect the detection of a motion vector, it is possible to limit the calculations of the data amount detection circuits II to low band frequency components.

Moreover, the method of decreasing calculations for detecting motion vectors, which was described earlier and quoted from Kin Fuki, "3-Staged Detection Method", pages 203-204, "TV Picture Multi-Dimensional Signal Processing", Nikkan-Kogyo Shinbunsha, also can be applied to the present invention.

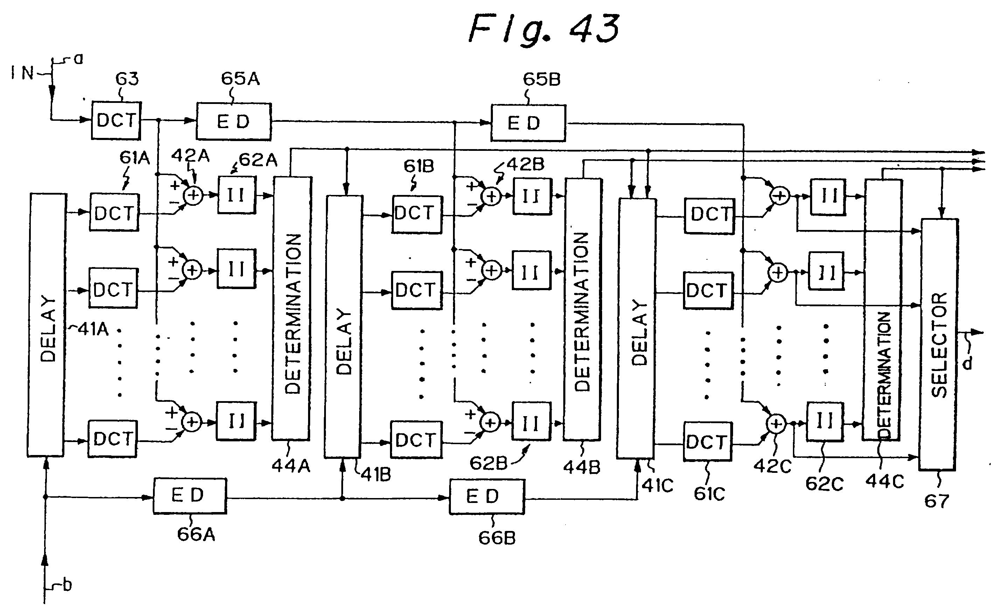

Figure 43 shows an embodiment according to such a method. In the embodiment of Figure 43, nine positions are detected three times so as to limit the amount of deviation. Figure 43 only shows the portions substituted from Figure 36 in the range from the inputs a and b to the output d. A delay portion 41A shown in Figure 43 is the same as other delay portions which have already been described. It has only 9 taps. A delay portion 41B, which is basically the same as the other delay portions, determines the delay amount of each tap in accordance with the most rough and minimum result obtained from a determination portion 44A. Likewise, a delay portion 41C assigns the delay amount for each tap in the range limited by the determination portion 44A and a determination portion 44B. Equalising delay circuits (ED) 65A, 65B, 66A and 66B ensure appropriate delays between the calculation portions.

The method of decreasing the calculation of the DCT, which is not shown in Figure 43, but which has been described above, can be applied to the present embodiment.

Apparatus embodying the invention can markedly decrease the memory capacity necessary for constructing a delay portion for detecting motion vectors, in particular a delay portion for matching blocks, and the memory capacity for performing cumulative operations, in comparison with the prior proposals described above. Thus, the entire scale of the motion vector detection apparatus can be decreased.

Since apparatus embodying the invention can reduce the two frame memories previously necessary for detecting a motion vector and for providing interframe encoding to one, the circuit scale can be decreased.

## Claims

1. A band compression apparatus providing a combination of motion compensation and an inter-frame encoding scheme, the apparatus comprising:
means (41, 42) for generating a difference between input picture data and picture data with a time difference of one frame;
means (44) for detecting a degree of matching of each of plural blocks of comparison points and thereby detecting a motion vector with the highest degree of matching; and
means (46, 51) for selecting and encoding the difference in accordance with said detected motion vector.

2. A band compression apparatus providing a combination of motion compensation and an inter-frame encoding scheme, the apparatus comprising:
delay means (41) for generating input picture data of the current frame and that of the preceding frame;
means (42) for forming a difference between said current frame and picture data of a plurality of preceding frames which have been encoded in accordance with an orthogonal conversion scheme; and
means for detecting a position which has the highest effect of data compression from said differences and for selectively outputting the difference of the detected position.
